# EUROPEAN PATENT APPLICATION

(11) **EP 4 741 438 A1**
(43) Date of publication of application: **13.05.2026**
(21) Application number: 24211238.1
(22) Date of filing: 06.11.2024
(51) Int. Cl.: C08G 59/50, C08G 59/68, C09D 163/00, C09J 163/00

(54) **OXATHIOLANONE-GROUP CONTAINING ADDITIVE IN A CURABLE EPOXY RESIN COMPOSITION**

(71) Applicant: BASF SE, 67056 Ludwigshafen am Rhein (DE)
(72) Inventor: Pawar, Madhura Shreekar, 67056 Ludwigshafen am Rhein (DE); Rudolf, Peter, 67056 Ludwigshafen am Rhein (DE); Fukuzumi, Takeo, 67056 Ludwigshafen am Rhein (DE); Koenig, Sandra Gloria, 67117 Limburgerhof (DE)
(74) Representative: BASF IP Association

(57) **Abstract**

A compound (A) of formula 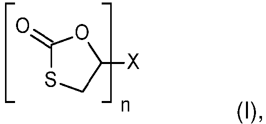 wherein
X is a n-valent organic group or H, and
n is an integer of 1, 2, 3 or 4, is provided for use as an additive in an amine curable epoxy resin composition, especially for preparing coatings, adhesives, sealants and composite materials.

## Description

The present invention relates to the use of an oxathiolanone group-containing compound as an additive in an amine curable epoxy resin composition, to an amine curable epoxy resin composition comprising said additive and to the use thereof for preparing an adhesive, a sealant, a coating or a composite material.

### Background of the invention

Epoxy resins are one of the most important classes of thermosetting polymers used in industry. Epoxy resins are usually defined as oligomeric compounds having on average more than one epoxy group per molecule which are converted into thermosetting polymers by reaction of suitable hardeners or by polymerization of the epoxy groups.

Due to their various properties like corrosion and humidity resistance, chemical resistance, for example, a high resistance towards organic solvents or alkalis, mechanical strength and electrical insulation as well as due to relative low costs, cured epoxy resins are used in a versatile field of applications such as paints, composites, coatings, adhesives, automotives and the aerospace industry. They may serve as a matrix for fiber composites and are often a major constituent in electrical laminates, structural adhesives, casting resins, and powder coatings.

Reaction with hardeners / curing agents converts the epoxy resin into three-dimensionally cross-linked thermoset materials. Because of usual high cross-linking density, many of the systems suffers from some undesired mechanical properties, like brittleness.

The epoxy resins typically have a high viscosity, which makes the application more difficult. Moreover, the high viscosity of the resins frequently limits the use of fillers, which is usually desirable for the purpose of modifying mechanical properties of the cured resin composition. In many cases, the use of fillers allows a reduction of costs of finally produced products, like coatings.

Further, the curing reaction by adding polyamines as a curing agent to the epoxy resins often show volume shrinkage. The volume shrinkage during the curing reaction causes voids and micro-cracks in the cured material, and thus results in lowering the mechanical strength of the material, for example, contact failure between the adhesive and the substrate or corrosion of the substrate.

Therefore, it is common to add diluents to the curing reaction of the epoxy resin and polyamines, like solvents or especially reactive diluents. Reactive diluents are substances of low molecular weight which have functional groups capable of reacting with epoxy groups of the epoxy resin with the amino groups of the hardener. The reactive diluents that are suitable for epoxy resins are typically monofunctional or polyfunctional oxiranes. Known reactive diluents improve the viscosity properties of the epoxy resin composition. However, in many cases they are detrimental to the hardness of the cured product or result in other poorer stability properties. In the prior art, various reactive diluents based on S-containing cyclic carbonates are described.

US 3,554,967 discloses the addition of ethylene trithiocarbonate to an amine curable epoxy resin to obtain significantly shorter gel points, compared to a resin without ethylene trithiocarbonate.

WO 2006/005386 A1 discloses an amine curing epoxy formulation comprising further a cyclic dithiocarbonate compound containing a -S-CS-O- group and a carboxylic acid like benzoic acid. The addition of the carboxylic acid is described to obtain less shrinkage.

EP 2468791 A1 discloses the use of a cyclic dithiocarbonate compound derived from Bisphenol A in an amine curable epoxy resin formulation including a further epoxy-based reactive diluent. The obtained coatings are described to show improved early water resistance.

However, the use of a cyclic dithiocarbonate compound as a reactive diluent shows still some disadvantages in view of some properties, like brittleness or handling or stability.

The use of a cyclic thiocarbonate compound as a monomer in stoichiometric amounts with polyamines and polyepoxy compounds as a cross-linking agent to yield cured polyurethanes is known from WO 2020/007634 A1 and WO 2019/034470 A1.

There is still a need for amine curable epoxy compositions having improved properties, like better processing, brittleness or stability for various applications, especially to find a balance between processing properties like sufficiently long pot-life time and mechanical properties, while the glass transition temperature should not be significantly reduced.

Therefore, it is an object of the present invention to provide an additive to be used in amine curable epoxy composition having improved properties, especially compared to known reactive diluents based on cyclic dithiocarbonate compounds. In particular, the pot lifetime of the epoxy composition should be improved, without significantly reducing mechanical properties or other stability properties of the resulting cured products.

Further, it is an object of the present invention to provide a filled epoxy resin composition having stable dispersible properties and allowing high solids formulations.

### Summary of the invention

It has now been found that specific oxathiolanone group-containing compounds act as a favorable additive, especially as a reactive diluent, when added to an epoxy resin composition. Amine curable epoxy resin compositions are available, which may be easily processed in various applications due to a sufficiently long pot lifetime, but may also be cured with sufficient high reactivity, evident from a lower gel time following the addition of the instant additive, compared to conventional epoxy amine resins.

Accordingly, in a first aspect the invention relates to the use of a compound (A) of formula 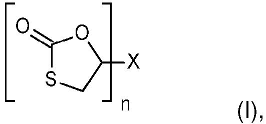 wherein X is a n-valent organic group or H, and n is an integer of 1, 2, 3 or 4,
as an additive in an amine curable epoxy resin composition.

In a further aspect, the invention relates to a curable epoxy resin composition comprising
a) a compound (A) of formula (I), as defined in any aspect herein;
b) an epoxy resin (B); and
c) a curing agent (C) comprising at least two amino groups, selected from a primary amino group, a secondary amino group and any combination thereof; wherein the equivalent ratio of groups of formula 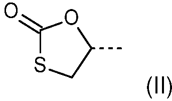 of compound (A) to epoxy groups of epoxy resin (B) is 0.45 : 1 to 0.05 : 1.

In a further aspect, the invention relates to the use of the curable epoxy resin composition, as defined in any aspect herein, for preparing an adhesive, a sealant, a coating or a composite material.

### Detailed description of the invention

The terms "alkyl", "alkylene", "alkoxy", "cycloalkyl", "cycloalkylene", "aryl", "halogen" are known in the art and generally have the following meaning, if said groups are not further specified in specific embodiments mentioned below:
Alkyl, e.g., C₁-C₁₈-alkyl, C₁-C₁₂-alkyl, C₁-C₆-alkyl, or C₁-C₄-alkyl, may be within the given limits of carbon atoms linear or branched, where possible. Examples are methyl (Me), ethyl (Et), n-propyl, isopropyl, n-butyl, 1-methylpropyl, 2-methylpropyl, t-butyl, n-pentyl, 2-pentyl, 3-pentyl, 2,2-dimethylpropyl, n-hexyl, 1-methylhexyl, n-heptyl, 1,1,3,3-tetramethylbutyl, 1-methylheptyl, 3-methylheptyl, n-octyl, 2-ethylhexyl, n-nonyl, n-decyl, n-undecyl, n-dodecyl, n-tridecyl, n-tetradecyl, n-pentadecyl, n-hexadecyl, n-heptadecyl, n-octadecyl and constitutional isomers of the aforementioned n-alkyl radicals.

Alkylene, e.g., C₁-C₁₈-alkylene, C₁-C₆-alkylene or C₄-C₆-alkylene, may be derived from linear or branched alkyl, if possible, by abstracting a H atom from any terminal carbon atom of the alkyl.

Alkyleneoxy, e.g., C₁-C₁₂-alkyleneoxy, is alkylene-O.

Cycloalkyl, e.g., C₅-C₁₀-cycloalkyl, C₅-C₆-cycloalkyl, includes cycloalkyl groups and bicyclic groups, which may be unsubstituted or substituted with alkyl groups. Examples are cyclopentyl, cyclohexyl, methylcyclohexyl, dimethylcyclohexyl, trimethylcyclohexyl, cycloheptyl, cyclooctyl or cyclododecyl. Bicyclic alkyl may be isobornyl (= 1,7,7-trimethylbicyclo[2.2.1]heptyl) or norbornyl (= bicyclo[2.2.1]heptyl). Cyclohexyl and cyclopentyl are preferred, more preferred is cyclohexyl.

Cycloalkylene, e.g., C₅-C₈-cycloalkylene or C₅-C₆-cycloalkylene, includes cycloalkylene groups, which may be unsubstituted or substituted with alkyl groups, preferably unsubstituted. Examples are 1,2-cyclopentylene, 1,3-cyclopentylene, 1,2-cyclohexylene, 1,4-cyclohexylene or 1,2-cycloheptylene.

Aryl, e.g., C₆-C₁₂-aryl, may be within the given limits of carbon atoms phenyl, fluorenyl, biphenylyl, terphenylyl or naphthyl, which may have a fused ring, such as in indanyl. Preferred examples are phenyl, 1-naphthyl, 2-naphthyl, 3- or 4-biphenylyl. Each aryl may be unsubstituted or substituted one or more times.

Aryloxy, e.g., C₆-C₁₂-aryloxy, is aryl-O. Arylthio, e.g., C₆-C₁₂-arylthio, is aryl-S.

Arylene, e.g., C₆-C₁₂-arylene, may be derived from above-defined aryl by abstracting a hydrogen atom from any ring carbon atom. Examples are o-phenylene, m-phenylene, p-phenylene, 1,4-naphthylene, or 2,6-naphthylene.

Aryleneoxy, e.g., C₆-C₁₂-aryleneoxy, is arylene-O. Arylenethio, e.g., C₆-C₁₂-arylenethio, is arylene-S.

Heteroaryl, e.g., C₂-C₁₀-heteroaryl, may be a ring with five to seven ring atoms, wherein nitrogen, oxygen or sulfur are the possible heteroatoms. Examples are within the given limits of carbon atoms thienyl, furyl, pyrrolyl, imidazolyl, pyrazolyl, thiazolyl, oxazolyl, pyridyl, triazinyl or triazinyl-based, e.g., a group derived from isocyanuric acid, benzofuranyl, benzoxazolyl, benzthiazolyl, etc.. Each heteroaryl may be unsubstituted or substituted one or more times.

Heteroarylene, e.g., C₂-C₁₀-heteroarylene, C₂-C₅-heteroarylene, may be derived from above-defined heteroaryl by abstracting a hydrogen atom from any ring carbon atom of the heteroaryl.

Halogen (Hal) denotes I, Br, CI, or F, preferably Cl on alkyl and Cl or Br on aryl.

Amine groups, for example, as represented by NR¹R², wherein R¹ and R² together are C₄-C₆-alkylene interrupted by O, S and/or NR³, are cyclic amines, wherein R¹ and R² thus form, together with the nitrogen atom they are attached to, an aliphatic N-heterocyclic residue comprising 4 to 6 ring carbon atoms, which may be optionally substituted by alkyl groups.

Examples are morpholinyl, thiomorpholinyl, piperidinyl, pyrrolidinyl, 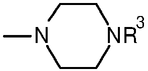 , or a C₁-C₄-alkyl substituted variant thereof.

The term "substituted" means "substituted one or more times with", that is 1 to 3 times, where possible, preferably 1 or 2 times, more preferably 1. If a substituent occurs more than once in a group, it may be different in each occurrence.

The term "oxathiolanone group", as used herein, means a 1,3-oxathiolane-2-one group, i.e., a group of formula (II).

Unless otherwise stated, molecular weights of polymers refer herein to the weight-average molecular weight, measured by gel-permeation chromatography using a polystyrene standard.

The term "any combination thereof", as used herein, means two or more combinations thereof. The term "any mixture thereof", as used herein, means two or more mixtures thereof.

As used herein, the indefinite article "a" comprises the singular but also the plural, i.e., an indefinite article in respect to a constituent of a composition means that the constituent is a single constituent or a plurality of constituent. If not stated otherwise, the indefinite article "a" and the expression "at least one" are used synonymously.

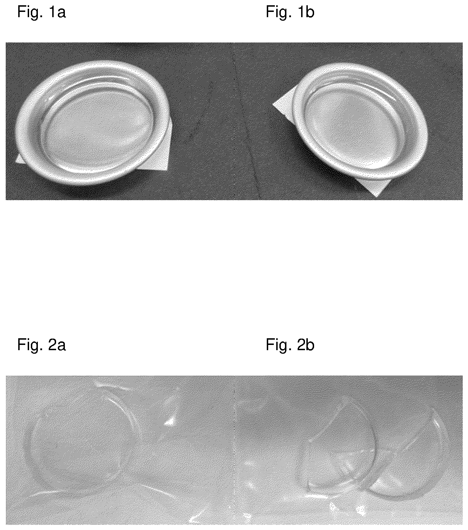

Figures 1a and 1b show a comparison of the appearance of a freshly prepared mixture of Comparative Example 6 and Example 2.
Figures 2a and 2b show a comparison of the appearance of a cookie of Comparative Example 6 and Example 2.
Figure 3 shows a comparison of Example 5 (E5, lower line) and Comparative Example 12 (C12, upper line) with respect to viscosity.
Figure 4 shows a comparison of Example 6 (E6, lower line), Example 7 (E7, middle line) and Comparative Example 13 (C13, upper line) with respect to viscosity.
Figure 5 shows a comparison of Example 6 (6, upper middle line), Example 8 (E8, lower middle line), Comparative Example 14 (C14, upper line) and Comparative Example 15 (C15, lower line) with respect to viscosity.

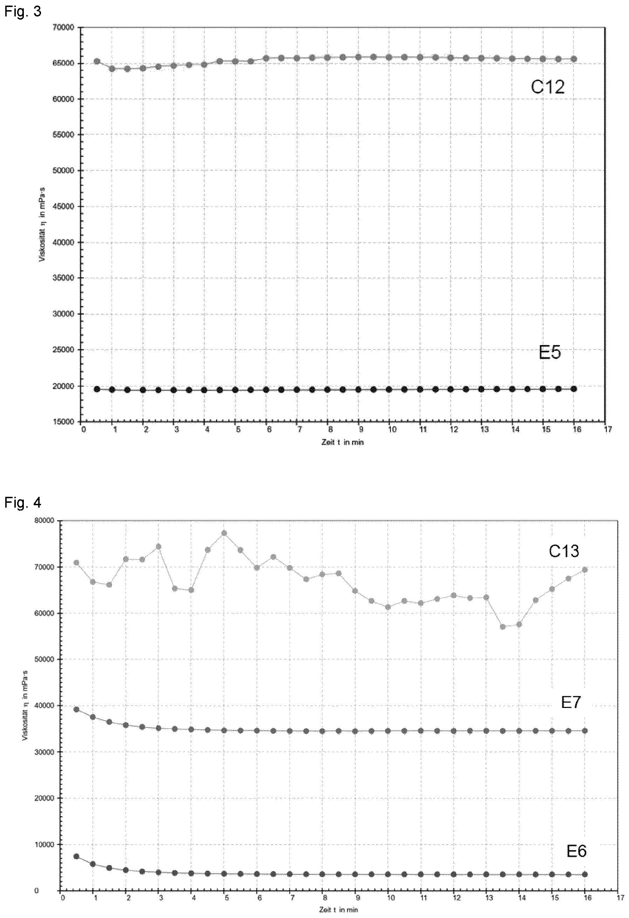

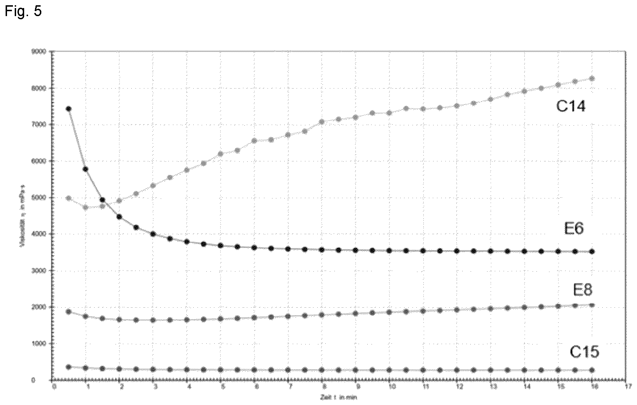

Within the figures 3 to 5, the time t in min is designated as Zeit, and the viscosity η in mPa.s is designated as Viskosität.

The compound (A) to be used as an additive is at least one compound of formula 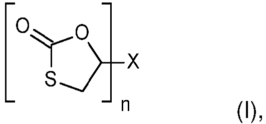 wherein
X is a n-valent organic group or H, and n is an integer of 1, 2, 3 or 4.

The n-valent organic group X may be substituted with up to 4 groups of formula

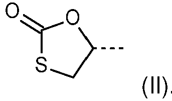

The group X may be a n-valent organic group of up to 30 carbon atoms, which may contain at least one organic unit and optionally at least one functional group. The organic unit may be an aliphatic unit, a cycloaliphatic unit, and/or a (hetero)aromatic unit. The functional group may be a functional group containing a heteroatom.

The functional group containing a heteroatom is a hetero-functional group selected from -O-, -S-, -COO- and -CO-. The functional group containing a heteroatom may be part of the aliphatic unit, the cycloaliphatic unit, and/or the (hetero)aromatic unit of the n-valent organic group and may be optionally present between at least one of said units.

Examples of an aliphatic unit may preferably be derived from a saturated hydrocarbon, which may be linear or branched, for example, an alkyl or alkylene group, said alkyl or alkylene group is unsubstituted or substituted.

Examples of a cycloaliphatic unit may be derived from a cyclic hydrocarbon, preferably cyclohexane, which may be substituted. Suitable examples include cyclohexane, which is optionally substituted with an alkyl group, for example, cyclohexyl, 1,4-cyclohexylene or 1,2-cyclohexylene.

Examples of a (hetero)aromatic unit may be derived from benzene, for example, phenyl or phenylene, like 1,4-phenylene, 1,3-phenylene, 1,2-phenylene, triazine, for example triazine-diyl or triazine-2,4,6-triyl, or isocyanuric acid, for example, 2,4,6-trioxo-1,3,5-triazine-triyl.

Accordingly, in a preferred aspect, the invention relates to the use of a compound (A) of formula (I), wherein X is a n-valent organic group of up to 30 carbon atoms or H, preferably a n-valent organic group of up to 25 carbon atoms or H.

Preferably, the compound (A) of formula (I) has a molecular weight of at most 500 g/mol. More preferably, the compound (A) of formula (I) has a molecular weight of 500 g/mol with X being a n-valent organic group of up to 30 carbon atoms or H.

In case n is 1, X may be hydrogen (H) or a monovalent organic group X¹.

The monovalent organic group X¹ may be C₁-C₁₈-alkyl or C₁-C₁₈-alkyl substituted with OH, halogen, NR¹R², C₅-C₁₀-cycloalkyl, C₆-C₁₂-aryl, C₆-C₁₂-aryloxy, C₆-C₁₂-arylthio or C₂-C₁₀-heteroaryl, and / or interrupted with O, S, -COO-, -OCOO-, -CO-, C₅-C₈-cycloalkylene, C₆-C₁₂-arylene or C₂-C₁₀-heteroarylene;
wherein R¹ and R² are independently of one another and at each occurrence C₁-C₄-alkyl or phenyl;
or R¹ and R² together are C₄-C₆-alkylene or C₄-C₆-alkylene interrupted by O, S and/or NR³; and R³ is C₁-C₄-alkyl.

Preferably, the monovalent organic group X¹ is C₁-C₁₈-alkyl or C₁-C₁₈-alkyl substituted with halogen, C₅-C₆-cycloalkyl, C₆-C₁₂-aryl, C₆-C₁₂-aryloxy, C₆-C₁₂-arylthio and / or interrupted with O, S, -COO-; C₅-C₈-cycloalkylene or C₆-C₁₂-arylene.

More preferably, the monovalent organic group X¹ is C₁-C₁₂-alkyl; C₁-C₁₈-alkyl substituted with halogen, cyclohexyl, phenyl, phenoxy, phenylthiol and / or interrupted with O, S, -COO-; cyclohexylene or phenylene.

Especially, the monovalent organic group X¹ is a group selected from C₁-C₁₂-alkyl and C₁-C₁₂-alkyl substituted with cyclohexylene, and/or interrupted with O, -COO-, cyclohexylene or phenylene, preferably interrupted with O or -COO-.

An especially preferred example of a compound (A) of formula (I) having a monovalent organic group X¹ is a compound of formula 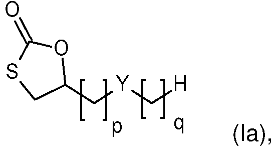 wherein Y is a direct bond, O or COO, and
p is an integer of 1 to 9, and q is an integer of 0 to 9.

Accordingly, in a preferred aspect, the invention relates to the use of a compound (A) of formula (I), wherein the compound (A) of formula (I) is a compound of formula 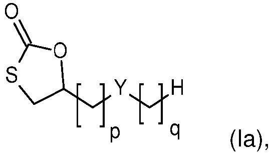 wherein Y is a direct bond, O or COO, and
p is an integer of 1 to 9, and q is an integer of 0 to 9.

In case n is 2, X is a divalent organic group X².

The divalent organic group X² may comprise at least one group selected from C₁-C₁₈-alkylene; and C₁-C₁₈-alkylene substituted with halogen, NR⁴R⁵, C₅-C₁₀-cycloalkyl, C₆-C₁₂-aryl, or C₂-C₁₀-heteroaryl, and/or interrupted with O, S, -COO-, -OCOO-, -CO-, C₅-C₈-cycloalkylene, C₆-C₁₂-arylene, C₆-C₁₂-aryleneoxy, C₆-C₁₂-arylenethio, 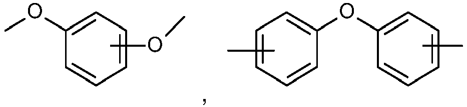 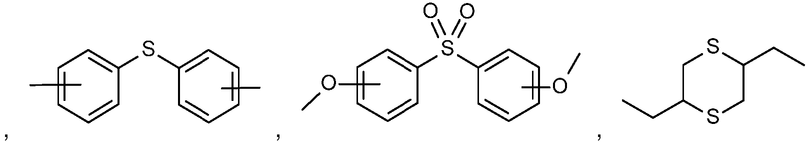 or C₂-C₁₀-heteroarylene; wherein R⁴ and R⁵ are independently of one another and at each occurrence C₁-C₄-alkyl or phenyl.

Preferably, the divalent organic group X² is selected from C₁-C₁₈-alkylene and C₁-C₁₈-alkylene interrupted with O, S, -COO-, C₅-C₆-cycloalkylene, C₆-C₁₂-arylene, C₆-C₁₂-aryleneoxy, C₆-C₁₂-arylenethio, 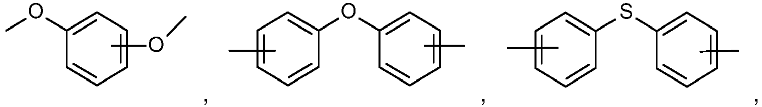 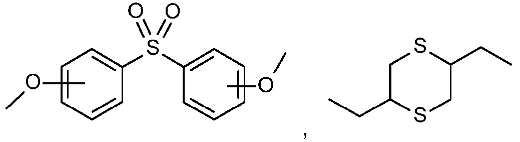 or C₂-C₁₀-heteroarylene.

An example of interrupting C₆-C₁₂-arylene may be phenylene, like 1,4-phenylene, 1,3-phenylene or 1,2-phenylene.

An example of interrupting C₅-C₈-cycloalkylene may be cyclohexylene, like 1,4-cyclohexylene or 1,2-cyclohexylene.

An example of interrupting C₆-C₁₂-aryleneoxy may be 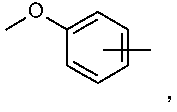 like

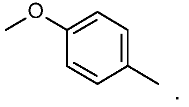

An example of interrupting C₆-C₁₂-arylenethio may be 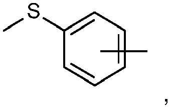 like

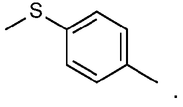

A suitable example of a C₂-C₅-heteroarylene may be

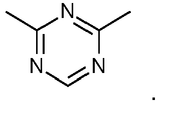

More preferably, the divalent organic group X² is selected from C₁-C₁₈-alkylene and C₁-C₁₈-alkylene interrupted with O, S, -COO-, cyclohexylene, phenylene, phenyleneoxy, phenylenethio,

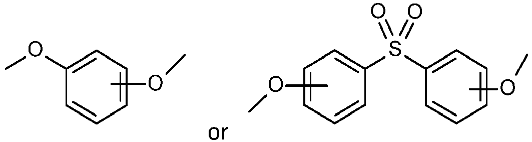

In particular, the divalent organic group X² is selected from C₁-C₁₂-alkylene and C₁-C₁₂-alkylene interrupted with O, -COO-, cyclohexylene, phenylene or phenyleneoxy.

An especially preferred example of a compound (A) of formula (I) having a divalent organic group X² is a compound of formula 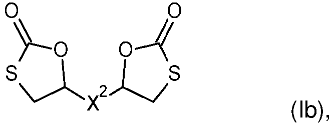 wherein X² is C₁-C₁₈-alkylene; C₁-C₁₈-alkylene interrupted with O, S, COO, C₅-C₈-cycloalkylene, phenylene, phenyleneoxy, phenylenethio,

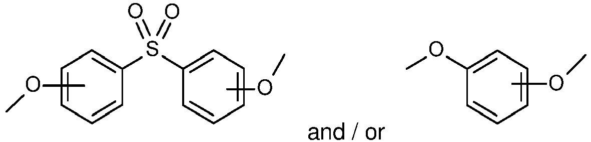

It is understood that the interrupting groups may be present one or more times and may be the same or different in each occurrence.

Preferred examples of the divalent group X² are 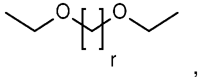 wherein r is 2, 3 or 4 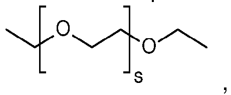 wherein s is about 1 to 10, preferably s is about 1 to 5; 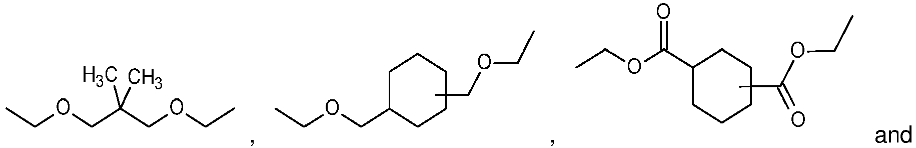 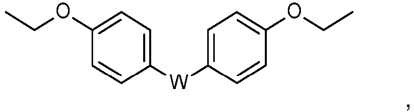 wherein W is CH₂, C(CH₃)₂, CH(CH₃) or C(CH₃)(C₂H₅) or SO₂.

In case n is 3, X is a trivalent organic group X³.

The trivalent organic group X³ is usually a group based on a benzenetriyl unit, a triazine-2,4,6-triyl unit, a 2,4,6-trioxo-1,3,5-triazine-triyl unit, a methylidyne unit or a nitrogen unit, preferably X³ is composed of either benzenetriyl, 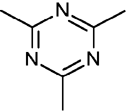 (triazine-2,4,6-triyl), 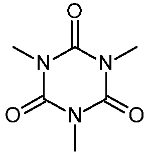 (2,4,6-trioxo-1,3,5-triazine-triyl), methylidyne or nitrogen and a divalent organic group X^{2a}, wherein X^{2a} is selected from C₁-C₁₈-alkylene; C₁-C₁₂-alkyleneoxy; C₆-C₁₂-arylene; C₆-C₁₂-aryleneoxy; and C₁-C₁₈-alkylene interrupted with O, S, -COO-, C₅-C₈-cycloalkylene, C₆-C₁₂-arylene, C₆-C₁₂-aryleneoxy, C₆-C₁₂-arylenethio, 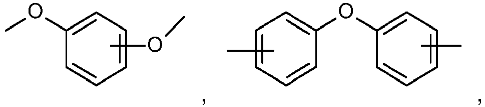 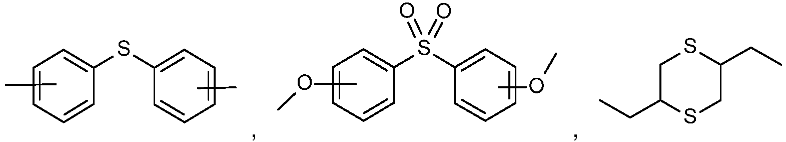 or C₂-C₅-heteroarylene.

Preferably, the trivalent organic group X³ is a group composed of either benzenetriyl, triazine-2,4,6-triyl, 2,4,6-trioxo-1,3,5-triazine-triyl, methylidyne or nitrogen and a divalent organic group X^{2a}, wherein X^{2a} is selected from C₁-C₁₂-alkylene; phenylene, C₁-C₁₂-alkyleneoxy; 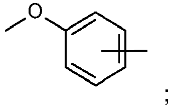 and C₁-C₆-alkylene interrupted with O, S, -COO-, cyclohexylene, phenylene and phenyleneoxy.

More preferably, the trivalent organic group X³ is a group composed of either benzenetriyl, triazine-2,4,6-triyl, 2,4,6-trioxo-1,3,5-triazine-triyl, methylidyne or nitrogen and a divalent organic group X^{2a}, wherein X^{2a} is selected from C₁-C₆-alkylene; phenylene, C₁-C₆-alkyleneoxy; 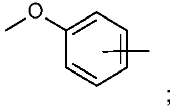 and C₁-C₆-alkylene interrupted with O, -COO-, cyclohexylene, phenylene and phenyleneoxy.

Suitable examples of a trivalent organic group are 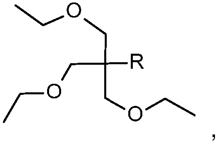 wherein R is H or C₁-C₃-alkyl;

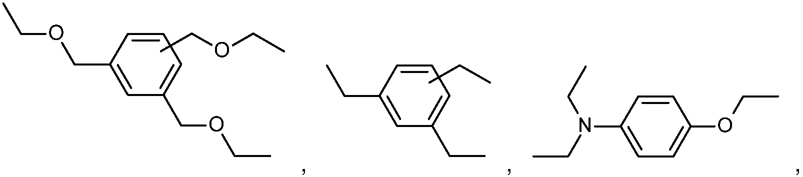

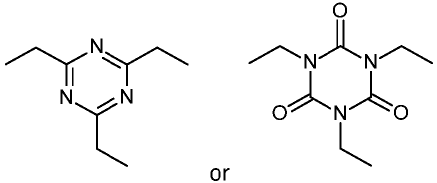

In case n is 4, X is a tetravalent organic group X⁴.

The tetravalent organic group X⁴ is usually a group derived from methane or benzene, preferably X³ is composed of either a group derived from methane or benzene and a divalent organic group X^{2a}, wherein X^{2a} is selected from C₁-C₁₈-alkylene; C₁-C₁₂-alkyleneoxy; C₆-C₁₂-arylene; C₆-C₁₂-aryleneoxy; and C₁-C₁₈-alkylene interrupted with O, S, -COO-, C₅-C₈ -cycloalkylene, C₆-C₁₂-arylene, C₆-C₁₂-aryleneoxy, C₆-C₁₂-arylenethio, 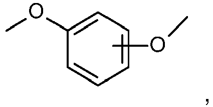 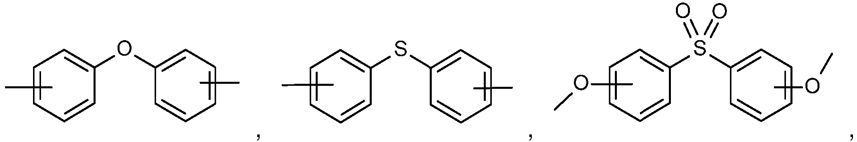 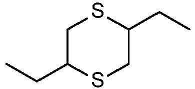 or C₂-C₅-heteroarylene.

Preferably, the tetravalent organic group X⁴ is a group composed of either a group derived from benzene or methane and a divalent organic group X^{2a}, wherein X^{2a} is selected from C₁-C₁₂-alkylene; phenylene; C₁-C₁₂-alkyleneoxy; 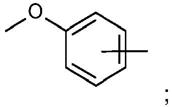 and C₁-C₆-alkylene interrupted with O, S, -COO-, cyclohexylene, phenylene and phenyleneoxy.

More preferably, the tetravalent organic group X⁴ is a group composed of either a group derived from benzene or methane and a divalent organic group X^{2a}, wherein X^{2a} is selected from C₁-C₆-alkylene; phenylene, C₁-C₆-alkyleneoxy; 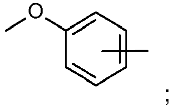 and C₁-C₆-alkylene interrupted with O, -COO-, cyclohexylene, phenylene and phenyleneoxy.

Suitable examples of a tetravalent organic group are

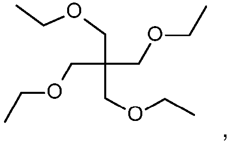

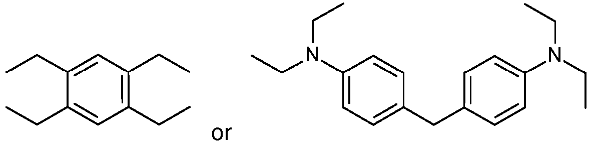

Accordingly, in a preferred aspect, the invention relates to the use of a compound (A) of formula (I), wherein
X is a monovalent organic group X¹ or H, said monovalent organic group X¹ is selected from C₁-C₁₈-alkyl; C₁-C₁₈-alkyl substituted with OH, halogen, NR¹R², C₅-C₁₀-cycloalkyl, C₆-C₁₂-aryl, C₆-C₁₂-aryloxy, C₆-C₁₂-arylthio or C₂-C₁₀-heteroaryl, and / or interrupted with O, S, -COO-, -OCOO-, -CO-, C₅-C₈-cycloalkylene, C₆-C₁₂-arylene or C₂-C₁₀-heteroarylene;
R¹ and R² are independently of one another and at each occurrence C₁-C₄-alkyl or phenyl;
or R¹ and R² together are C₄-C₆-alkylene or C₄-C₆-alkylene interrupted by O, S and/or NR³; and R³ is C₁-C₄-alkyl;
   or
X is a divalent organic group X², said divalent organic group X² is selected from C₁-C₁₈-alkylene and C₁-C₁₈-alkylene substituted with halogen, NR⁴R⁵, C₅-C₁₀-cycloalkyl, C₆-C₁₂-aryl, or C₂-C₁₀-heteroaryl, and/or interrupted with O, S, -COO-, -OCOO-, -CO-, C₅-C₈-cycloalkylene, C₆-C₁₂-arylene, C₆-C₁₂-aryleneoxy, C₆-C₁₂-arylenethio, 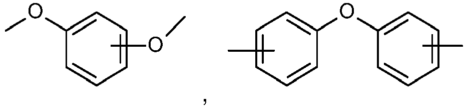 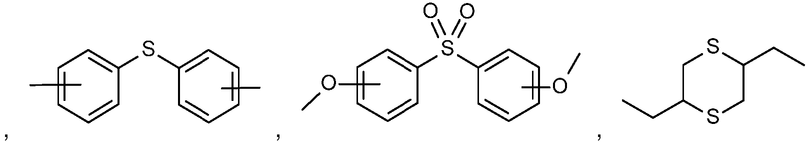 or C₂-C₁₀-heteroarylene;
R⁴ and R⁵ are independently of one another and at each occurrence C₁-C₄-alkyl or phenyl; or
X is a trivalent organic group X³, said trivalent group X³ is composed of either benzenetriyl, triazine-2,4,6-triyl, 2,4,6-trioxo-1,3,5-triazine-triyl, methylidyne or nitrogen and a divalent organic group X^{2a},
   or
X is a tetravalent organic group X⁴, said tetravalent group X⁴ is composed of either a group derived from methane or benzene and a divalent organic group X^{2a},
wherein X^{2a} is selected from C₁-C₁₈-alkylene; C₁-C₁₂-alkyleneoxy; C₆-C₁₂-arylene; C₆-C₁₂-aryleneoxy; and C₁-C₁₈-alkylene interrupted with O, S, -COO-, C₅-C₈-cycloalkylene, C₆-C₁₂-arylene, C₆-C₁₂-aryleneoxy, C₆-C₁₂-arylenethio, 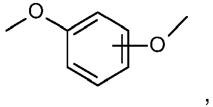 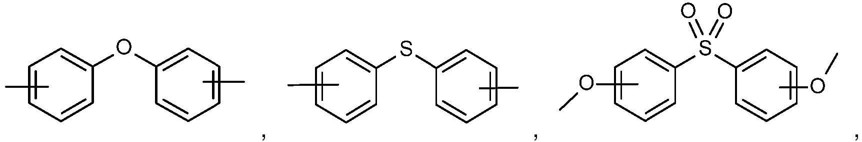 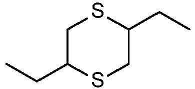 or C₂-C₅-heteroarylene, preferably with the proviso that the compound (A) has a molecular weight of at most 500 g/mol.

The compound (A) of formula (I) preferably contains 1, 2 or 3 groups of formula (II), more preferably 2 or 3 groups of formula (II).

Accordingly, in a preferred aspect, the invention relates to the use of a compound (A) of formula (I), wherein n is an integer of 1, 2 or 3, preferably 1 or 2.

Preferably, the compound (A) of formula (I) does not contain a hydroxy group.

In a further preferred aspect, the invention relates to the use of a compound (A) of formula (I), wherein
X is a monovalent organic group X¹ or H, said monovalent organic group X¹ is C₁-C₁₂-alkyl; C₁-C₁₂-alkyl substituted with halogen, cyclohexyl, phenyl, phenoxy, phenylthiol and / or interrupted with O, S, -COO-; cyclohexylene or phenylene;
   or
X is a divalent organic group X², said divalent organic group X² is selected from C₁-C₁₈-alkylene and C₁-C₁₈-alkylene interrupted with O, S, -COO-, cyclohexylene, phenylene, phenyleneoxy, phenylenethio, 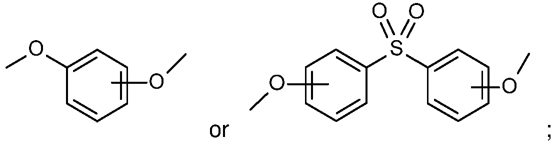 or
X is a trivalent organic group X³, said trivalent organic group X³ is group composed of either benzenetriyl, triazine-2,4,6-triyl, 2,4,6-trioxo-1,3,5-triazine-triyl, methylidyne or nitrogen and a divalent organic group X^{2a}, wherein X^{2a} is selected from C₁-C₁₂-alkylene; phenylene, C₁-C₁₂-alkyleneoxy; 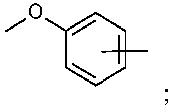 and C₁-C₆-alkylene interrupted with O, S, -COO-, cyclohexylene, phenylene and phenyleneoxy.

It is understood that any mixture of compounds (A) of formula (I) may be used as an additive in the amine curable epoxy resin composition.

The compound (A) of formula (I) is usually liquid at a temperature of 70°C and 1 bar, preferably at a temperature of 50°C, more preferably at a temperature of 30°C.

It is preferred that the n-valent organic group X includes a -CH₂- group connecting to the group of formula (II). More preferably, the n-valent organic group X includes a ···CH₂-Z- group connecting *via* the dashed bond (···) to the group of formula (II), wherein Z may be -O- or -OCO-.

In a further preferred aspect, the invention relates to the use of a compound (A) of formula (I), wherein the compound of formula (I) is a compound of formula 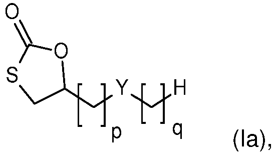 wherein Y is a direct bond, O or COO;
p is an integer of 1 to 9; and q is an integer of 0 to 9;
   or
a compound of formula 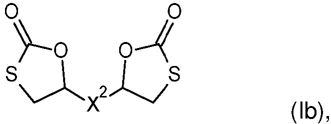 wherein X² is C₁-C₁₈-alkylene; C₁-C₁₈-alkylene interrupted with O, S, COO, C₅-C₈-cycloalkylene, phenylene, phenyleneoxy, phenylenethio, 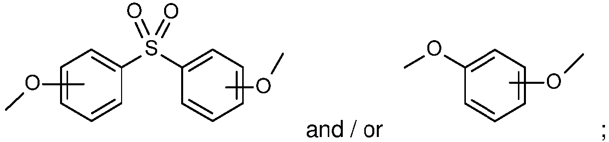
or a mixture of a compound of formula (Ia) and a compound of formula (Ib).

More preferred is the use of a compound (A) of formula (I), wherein the compound of formula (I) is a compound of formula (Ia), wherein Y is a direct bond, O or COO;
p is an integer of 1 to 4; and q is an integer of 0 to 4;
   or
a compound of formula (Ib), wherein X² is C₁-C₁₈-alkylene; C₁-C₁₈-alkylene interrupted with O, S, COO, C₅-C₈-cycloalkylene, phenylene, phenyleneoxy, phenylenethio, 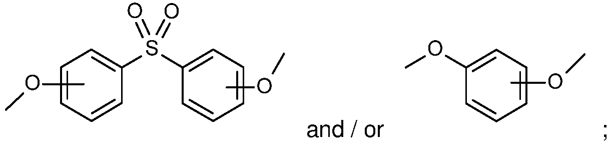 or any mixture thereof.

Especially preferred are compounds of formula (Ib).

Accordingly, in a preferred aspect, the invention relates to the use of a compound (A) of formula (I), wherein the compound of formula (I) is a compound of formula (Ib), wherein the divalent group X² is selected from 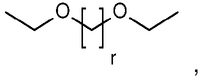 wherein r is 2, 3 or 4; 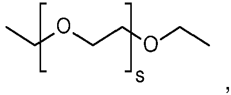 wherein s is about 1 to 10, preferably s is about 1 to 5; 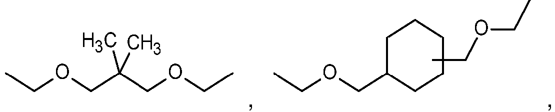 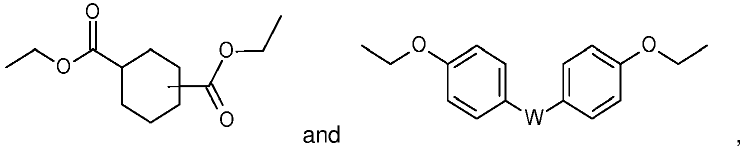 wherein W is CH₂, C(CH₃)₂, CH(CH₃) or C(CH₃)(C₂H₅) or SO₂.

The compounds (A) may be obtainable by a process, as described in WO 2019/034469 A1, WO 2019/034470 A1 or WO 2019/034473 A1. The process usually comprises the following steps:
a) a compound having one, two or more epoxy groups is used as starting material,
b) said compound is reacted with phosgene or an alkyl chloroformate to form an adduct, and
c) said adduct is reacted with an anionic sulfur-containing compound to form a compound that contains one, two or more oxathiolanone groups.

Further processes for preparing alkylene monothiocarbonates are described, for example, in US 3072676, US 3201416, US 3517029 and US 3349100 and US 2828318.

The compound (A) of formula (I) is suitable to be used as an additive in an amine curable epoxy resin composition. The amine curable epoxy resin composition usually comprises at least one epoxy resin (B) and at least one curing agent (C). Preferably, the compound (A) of formula (I) is suitably used in an epoxy resin component of an amine curable two-pack epoxy resin composition.

Accordingly, in a further aspect, the invention relates to a curable epoxy resin composition comprising
a) a compound (A) of formula (I), as defined in any aspect herein;
b) an epoxy resin (B); and
c) a curing agent (C) comprising at least two amino groups, selected from a primary amino group, a secondary amino group and any combination thereof; wherein the equivalent ratio of groups of formula 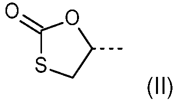 of compound (A) to epoxy groups of epoxy resin (B) is 0.45 : 1 to 0.05 : 1.

In general, the compound(s) (A) of the formulae (I), preferably the compound(s) of formula (Ia) or (Ib), will be used in a total amount of from at least 0.1 to 30 wt%, based on the total weight of the epoxy resin (B), preferably 2 to 30 wt%, more preferably 2 to 25 wt%.

Preferably, the amine curable epoxy resin composition comprises the compound (A) of formula (I) in an amount, wherein the equivalent ratio of groups of formula (II) of compound (A) to epoxy groups of epoxy resin (B) is 0.4 : 1 to 0.1 : 1, more preferably 0.35 : 1 to 0.1 : 1.

The amine curable epoxy resin composition may be formulated as a one-pack or a two-pack formulation, preferably as a two-pack formulation. A two-pack formulation comprises generally as a first component an epoxy resin component and as a second component a hardener component. The epoxy resin component (i) generally comprises the epoxy resin (B) and the compound of formula (I) and optionally a filler.

Accordingly, in a preferred aspect, the invention relates to an amine curable epoxy resin composition, wherein the curable epoxy resin composition is a two-pack formulation comprising
(i) an epoxy resin component containing
   a) a compound (A) of formula (I),
   b) an epoxy resin (B), and
   d) optionally a filler; and
(ii) a hardener component containing
   c) a curing agent (C).

As epoxy resin (B) any substance containing epoxy groups, which are typically used in curable epoxy resin compositions, may be used. The epoxy resin (B) may include any mixture of epoxy resins (B).

The epoxy resin (B) usually has 2 to 10 epoxy groups, preferably 2 to 6, more preferably 2 to 4, and, in particular, 2 epoxy groups. The epoxy equivalent weight (EEW) in typical epoxy resins B is commonly in the range from 120 to 3000 g/equivalent. The epoxy equivalent weight gives the average mass of the of the epoxy resin in g per mole of epoxy group (according to DIN 16945).

The epoxy resin (B) may be a liquid resin, a solid resin or a mixture thereof. A liquid resin usually differs from a solid resin in lower viscosity. Moreover, a liquid resin generally has a higher proportion of epoxy groups and, accordingly, a lower epoxy equivalent weight. Preferably, the epoxy resin (B) is a liquid resin at room temperature (25°C).

The amount of epoxy groups in a typical liquid resin is commonly in the range from 120 to 200 g/equivalent, and that of the solid resins is in the region of 450-3000 g/equivalent.

The viscosity of the liquid resin at 25°C is typically of from 1 to 20 Pa s, preferably from 5 to 15 Pa s. The viscosity of the solid resin at 25°C is typically of from 5 to 40 Pa s range, preferably from 20 to 40 Pa s. The viscosities reported here are the values determined in accordance with DIN 53015 at 25°C, as 40% strength solutions of the resins in methyl ethyl ketone.

The epoxy resin (B) may be a glycidyl-based epoxy resin, for example, one prepared by etherification of an aromatic, aliphatic or cycloaliphatic polyol with epichlorohydrin. An epoxy resin of this kind is frequently also referred to as a polyglycidyl ether of an aromatic, an aliphatic or a cycloaliphatic polyol, respectively.

The epoxy resins may be low-molecular-weight compounds generally having a number-average molecular weight (Mₙ) smaller than 1000 g/mol or may be relatively high-molecular weight compounds (polymers). The polymeric epoxy resins preferably have a degree of oligomerization of from 2 to 25 units, more preferably from 2 to 10 units.

Examples of a polyglycidyl ether of an aromatic polyol include the resins derived from the diglycidyl ether of bisphenol A, the resins derived from bisphenol F and the resins derived from bisphenol S.

Further examples of epoxy resins based on polyglycidyl ethers of aromatic polyols are glycidyl ethers of phenol- and cresol-based novolaks. Novolaks are prepared by the acid-catalyzed condensation of formaldehyde and phenol or cresol. Reacting the novolaks with epichlorohydrin produces the glycidyl ethers of the novolaks.

Examples of a polyglycidyl ether of a cycloaliphatic polyol include the ring hydrogenation products of polyglycidyl ethers based on bisphenol A, the ring hydrogenation products of polyglycidyl ethers based on bisphenol F, the ring hydrogenation products of polyglycidyl ethers based on bisphenol S, the ring hydrogenation products of polyglycidyl ethers based on novolaks, and mixtures thereof. Compounds of this kind are typically prepared by selective hydrogenation of the aromatic rings in the afore-mentioned aromatic polyglycidyl ethers.

Examples of a polyglycidyl ether of an aliphatic polyol include diglycidyl ether of aliphatic diols, for example, diglycidyl ethers of polyalkoxylene diols.

The epoxy resin (B) may also be a polyglycidyl ester of cycloaliphatic polycarboxylic acids. Examples of polyglycidyl esters of cycloaliphatic polycarboxylic acids include diglycidyl hexahydrophthalate.

The epoxy resin (B) may also be a polyacrylate resin containing epoxy groups. These resins are generally prepared by copolymerization of at least one ethylenically unsaturated monomer having at least one epoxy group, especially in the form of a glycidyl ether group, with at least one further ethylenically unsaturated monomer having no epoxy group; at least one of the comonomers is preferably an ester of (meth)acrylic acid. Examples of the ethylenically unsaturated monomer having at least one epoxy group include glycidyl (meth)acrylate, allyl glycidyl ether and vinyl glycidyl ether. Examples of the ethylenically unsaturated monomer having no epoxy group include C₁-C₂₀-alkyl esters of (meth)acrylic acid, preferably methyl (meth)acrylate, ethyl (meth)acrylate, butyl (meth)acrylate, and 2-ethylhexyl (meth)acrylate; carboxylic acids, such as (meth)acrylic acid; carboxylic amides, such as (meth)acrylamide; vinyl aromatic compounds, such as styrene, methylstyrene, and vinyltoluene; nitriles, such as (meth)acrylonitrile; vinyl halides and vinylidene halides, such as vinyl chloride and vinylidine fluoride; vinyl esters, such as vinyl acetate; and hydroxyl-containing monomers, such as hydroxyethyl (meth)acrylate. The epoxy group-containing polyacrylate resin typically has an epoxy equivalent weight of 400 to 2500, preferably 500 to 1500, more preferably 600 to 1200. The number-average molecular weight (Mₙ) (determined by gel permeation chromatography using a polystyrene standard) is typically of from 1000 to 15 000, preferably from 1200 to 7000, more preferably from 1500 to 5000. The glass transition temperature (T_{G}) is typically in the range from 30 to 80°C, preferably from 40 to 70°C, more preferably from 50 to 70°C (measured by means of differential calorimetry (DSC)).

The epoxy resin (B) may also be tetraglycidyl methylenedianiline (TGMDA), triglycidyl p-aminophenol and triglycidyl isocyanurate.

The epoxy resin (B) may also derive from other epoxides (non-glycidyl ether epoxy resins). These include, in particular, compounds, including oligomers and polymers, which have at least two epoxidized cycloaliphatic group(s), more particularly 7-oxabicyclo-[4.1.0]-heptyl groups, which are obtainable by epoxidation of compounds having cyclohexenyl groups. Examples of the epoxidation products of compounds having at least two cycloaliphatic group are 4-epoxyethyl-1,2-epoxycyclohexane and 3,4-epoxycyclohexylmethyl-3',4'-epoxycyclohexane carboxylate.

Preferred are the compounds which have at least two 7-oxabicyclo-[4.1.0]-heptyl groups, which are obtainable by epoxidation of compounds having cyclohexenyl groups, and their oligomers, not alone but instead in combination with one or more of the afore-mentioned epoxy resins which have at least two glycidyl ether groups.

The epoxy resin (B) may also be epoxidized fatty acids, epoxidized fatty acid esters, and epoxidized fatty alcohols that in each case have at least two epoxy groups.

Examples of suitable epoxy resins (B) are the products commercially available as EPILOX^{®} (Leuna-Harze), EPONEX^{®} (Hexion), EPIKOTE^{®}, EPONOL^{®}, D.E.R (DOW), ARALDITE (Huntsman) or ARACAST (Huntsman).

The epoxy resin (B) comprises preferably a polyglycidyl ether of an aromatic, an aliphatic or a cycloaliphatic polyol.

Thus, the curable epoxy resin composition or the epoxy resin component comprises preferably a polyglycidyl ether of an aromatic, an aliphatic or a cycloaliphatic polyol, especially a polyglycidyl ether of a cycloaliphatic or an aromatic polyol.

In particular, the curable epoxy resin composition or the epoxy resin component comprises at least one epoxy resin (B) selected from a polyglycidyl ether of bisphenol A, a polyglycidyl ether of bisphenol F, a polyglycidylether of bisphenol S, a polyglycidyl ether of a novolak, a polyglycidyl ether of hydrogenated bisphenol A, a polyglycidyl ether of a hydrogenated bisphenol F and any mixture thereof.

Accordingly, in a preferred aspect, the invention relates to a curable epoxy resin composition, wherein the epoxy resin (B) comprises at least one polyglycidylether of an aromatic, an aliphatic or a cycloaliphatic polyol, preferably of an aromatic or a cycloaliphatic polyol, or any mixture thereof.

Especially preferred is a curable epoxy resin composition, wherein the epoxy resin (B) comprises at least one polyglycidylether of an aromatic polyol, wherein the aromatic polyol is selected from bisphenol A, bisphenol F or bisphenol S.

Generally, the curable epoxy resin composition comprises the epoxy resin (B) in an amount of at least 30 wt%, based on the total weight of the amine curable epoxy resin composition, preferably of at least 50 wt%.

The curing of the epoxy resin composition is typically effected by means of a suitable curing agent (C), which is generally added shortly before curing.

A curing agent (C) in the context of the invention is understood to mean a compound having at least two amino groups, selected from a primary amino group, a secondary amino group and any mixture thereof. Thus, the curing agent has an NH functionality of at least 2 corresponding to a compound having at least 2 secondary amino groups (accordingly, for example, a compound having at least 2 primary amino groups has an NH functionality of 4).

Preferably, the curing agent (C) has a NH functionality of at least 3.

The curing agent (C) has on average at least two primary or secondary amino groups per molecule, e.g., two, three or four primary or secondary amino groups per molecule. Suitable curing agents (C) are, for example,
- aliphatic polyamines such as ethylenediamine, propane-1,2-diamine, propane-1,3-diamine, pentamethylenediamine, 2-methyl-1,5-pentamethylenediamine, hexamethylenediamine, octamethylenediamine, 1,10-diaminodecane, 1,12-diaminododecane, diethylenetriamine (DETA), triethylenetetramine (TETA), dimethyl-diethylenetriamine (DMDETA), tetraethylenepentamine, 2,2-dimethyl-1,3-propanediamine, trimethylhexamethylenediamine, 1-(3-aminopropyl)-3-aminopropane, 1,3-bis(3-aminopropyl)propane, 4-ethyl-4-methylamino-1-octylamine, 1,2-dimethylethylenediamine (DMEDA), xylylenediamine, in particular meta-xylylenediamine (MXDA), polyethyleneimine or polyvinylamine;
- cycloaliphatic diamines, such as 1,2-diaminocyclohexane, 1,2-, 1,3-, 1,4-bis(aminomethyl)-cyclohexane, 1-methyl-2,4-diaminocyclohexane, N-cyclohexylpropylene-1,3-diamine, 4-(2-aminopropan-2-yl)-1-methylcyclohexan-1-amine, isophoronediamine, 4,4'-diaminodicyclohexylmethane, 3,3'-dimethyl-4,4'-diaminodicyclohexylmethane, 3,3',5,5'-tetramethyl-4,4'-diaminodicyclohexylmethane, 4,8-diamino-tricyclo[5.2.1.0]decane, norbornanediamine, menthanediamine or menthenediamine;
- aromatic diamines such as tolylenediamine, bis(4-aminophenyl)methane (MDA or methylenedianiline) or 4-aminophenylsulfone (also known as DADS, DDS or dapsone);
- cyclic polyamines, such as piperazine or N-aminoethylpiperazine;
- etheramines, such as diaminodiglycol;
- polyetheramines, in particular difunctional and trifunctional primary polyetheramines based on polypropylene glycol, polyethylene glycol, polybutylene oxide, poly(butane-1,4-diol), polytetrahydrofuran (polyTHF) or polypentylene oxide, e.g. 4,7,10-trioxatridecane-1,3-diamine, 4,7,10-trioxatridecane-1,13-diamine, 1,8-diamino-3,6-dioxaoctane, 1,10-diamino-4,7-dioxadecane, 1,12-diamino-4,9-dioxadodecane, 1,3-diamino-4,7,10-trioxatridecane, primary polyetheramines based on polypropylene glycol and having an average molar mass of 230, such as Polyetheramine D 230 (BASF) or Jeffamine^{®} D 230 (Huntsman), difunctional, primary polyetheramines based on polypropylene glycol and having an average molar mass of 400, such as Polyetheramine D 400 or Jeffamine XTJ 582, difunctional, primary polyetheramines based on polypropylene glycol and having an average molar mass of 2000, such as Polyetheramine D 2000, Jeffamine D 2000 or Jeffamine XTJ 578, difunctional, primary polyetheramines based on propylene oxide having an average molar mass of 4000, such as Polyetheramine D 4000, trifunctional, primary polyetheramines prepared by reacting propylene oxide with trimethylolpropane followed by amination of the terminal OH groups and having an average molar mass of 403, such as Polyetheramine T 403 or Jeffamine T 403, trifunctional, primary polyetheramines prepared by reacting propylene oxide with glycerol followed by amination of the terminal OH groups and having an average molar mass of 5000, such as Polyetheramine T 5000 or Jeffamine T 5000, aliphatic polyetheramines formed from a polyethylene glycol grafted with propylene oxide and having an average molar mass of 600, such as Jeffamine ED-600 or Jeffamine XTJ-501, aliphatic polyetheramines formed from a polyethylene glycol grafted with propylene oxide and having an average molar mass of 900, such as Jeffamine ED-900, aliphatic polyetheramines formed from a polyethylene glycol grafted with propylene oxide and having an average molar mass of 2000, such as Jeffamine ED-2003, difunctional, primary polyetheramines prepared by amination of a diethylene glycol grafted with propylene oxide and having an average molar mass of 220, such as Jeffamine HK-511, aliphatic polyetheramines based on a copolymer formed from poly(tetramethylene ether glycol) and polypropylene glycol and having an average molar mass of 1000, such as Jeffamine XTJ-542, aliphatic polyetheramines based on a copolymer formed from poly(tetramethylene ether glycol) and polypropylene glycol and having an average molar mass of 1900, such as Jeffamine XTJ-548, aliphatic polyetheramines based on a copolymer formed from poly(tetramethylene ether glycol) and polypropylene glycol and having an average molar mass of 1400, such as Jeffamine XTJ-559, polyethertriamines based on an at least trihydric alcohol grafted with butylene oxide and having an average molar mass of 400, such as Jeffamine XTJ-566, aliphatic polyetheramines prepared by amination of alcohols grafted with butylene oxide and having an average molar mass of 219, such as Jeffamine XTJ-568, polyetheramines based on pentaerythritol and propylene oxide and having an average molar mass of 600, such as Jeffamine XTJ-616, polyetheramines based on triethylene glycol and having an average molar mass of 148, e.g. Jeffamine EDR-148, difunctional, primary polyetheramines prepared by amination of an ethylene glycol grafted with propylene oxide and having an average molar mass of 176, such as Jeffamine EDR-176, and polyetheramines prepared by amination of polytetrahydrofuran (polyTHF) and having an average molar mass of 250, e.g. PolyTHF-Amine 350 (BASF) and mixtures of said amines;
- polyamidoamines (amidopolyamines) obtainable by reacting dimeric fatty acids (e.g., linoleic acid dimer) with low-molecular-weight polyamines such as diethylenetriamine, 1-(3-aminopropyl)-3-aminopropane or triethylenetetramine or other diamines such as the aliphatic or cycloaliphatic diamines mentioned herein-before;
- phenalkamines, such as those known from epoxide chemistry;
- adducts obtainable by reacting polyamines, in particular diamines, with a substoichiometric amount of epoxy resin or epoxy-containing reactive diluent, preference being given to the use of adducts in which approx. 5 to 50% of the amino groups have been reacted with epoxy groups;
and also mixtures of the above curing agents, more particularly mixtures of difunctional amines from the group of the aliphatic, cycloaliphatic, and aromatic amines with the afore-mentioned polyetheramines.

A mixture of different curing agents (C) may also be used, for example, a small amount of a rapid curing agent (C) that establishes immediate strength without reducing the pot life of the product to be cured too much, plus a slow curing agent (C) for final curing. A suitable example may be a mixture of a curing agent (C) having at least one primary amino group with low steric hindrance and a curing agent (C) having at least one primary amino group with higher steric hindrance.

Preferred curing agents (C) are
- aliphatic polyamines,
- cycloaliphatic diamines, in particular 1,3-bis(aminomethyl))cyclohexane, isophoronediamine, N-cyclohexylpropylene-1,3-diamine and 4,4'-diaminodicyclohexylmethane (Dicykan);
- etheramines, in particular diaminodiglycol;
- difunctional or trifunctional primary polyetheramines based on polyethylene glycol or poly-THF;
- polyamines in which there is high mobility and low steric hindrance about the amino group, for example, α,ω-diamino-n-aikanes, in which the alkyl chain may be interrupted by oxygen atoms (for example 4,9-dioxadodecane-1 ,12-diamine or 4,7,10-trioxatridecane-1,13-diamine, PolyTHF-Amine 350) or polyethyleneimine (for example Lupasol^{®} FG).

Preferably, the at least one curing agent (C) has at least one primary aliphatic group and an NH functionality of at least 3 (for example at least one primary and one secondary amino group). More preferably, the at least one curing agent has at least two primary aliphatic amino groups (NH-functionality of 4).

The epoxy resin component is substantially free from a curing agent and is cured only through adding a curing agent. Substantially free from a curing agent means that the amount of a curing agent is less than 5 wt%, based on the total weight of the curable epoxy resin composition, preferably less than 1 wt%, more particularly less than 0.5 wt%.

Usually, the epoxy resin (B) and the curing agent (C) are used in an approximately stoichiometric ratio in terms of epoxy groups and NH functionalities. Preferably, the ratio of epoxy groups of epoxy resin (B) to NH-functionality of curing agent (C) is of from 1 : 0.8 to 0.8 to 1, especially from 1 : 0.85 to 0.85 to 1.

The amine curable epoxy resin composition may also comprise one or more suitable accelerators for curing. Suitable accelerators for curing the amine curable epoxy resin composition are, for example, imidazoles, imidazolines, tertiary amines, amidines, guanidines, urea compounds or ketimines.

Examples of accelerators are substituted imidazoles such as 1-methylimidazole, 2-methylimidazole, 2,4-ethylmethylimidazole, 2-phenylimidazole or 1-cyanoethylimidazole; imidazolines such as 2-phenylimidazoline; tertiary amines such as N,N-dimethylbenzylamine, 1,4-diaza-bicyclo[2,2,2]octane (DABCO), S-triazine (Lupragen N 600), bis(2-dimethylaminoethyl)ether (Lupragen N 206), pentamethyldiethylenetriamine (Lupragen N 301), trimethylaminoethyl-ethanolamine (Lupragen N 400), tetramethyl-1,6-hexanediamine (Lupragen N 500), aminoethylmorpholine, aminopropylmorpholine, 2,4,6-tris(dimethylaminomethyl)phenol (DMP 30); amidines such as 1,8-diazabicyclo-[5.4.0]-undec-7-ene (DBU), 1,5-diazabicyclo[4.3.0]-undec-7-ene (DBN); guanidines such as tetramethylguanidine; or ketimines such as Epikure 3502 (a reaction product of ethylenediamine with methyl isobutyl ketone).

The accelerator, where desired, is used in an amount of from 0.01 to 10 wt%, based on the total weight of the epoxy resin (B), the compound (A), and curing agent(s) (C). In one preferred embodiment there is no need for an accelerator, i.e., the amount of the accelerator in the composition is less than 0.01 wt%.

If present, the catalysts are preferably present in the hardener component (ii).

The compound (A) of formula (I) is preferably used as a reactive diluent in an amine curable epoxy resin composition, especially in an epoxy resin component (i). In addition, the compound (A) of formula (I) is preferably used as an accelerator in an amine curable epoxy resin composition, especially in an epoxy resin component (i).

Accordingly, in a preferred aspect, the invention relates to the use of a compound (A) of formula (I), wherein the compound (A) is used as a reactive diluent in an amine curable epoxy resin composition, preferably as a reactive diluent in an epoxy resin component (i) of a two-pack amine curable epoxy resin composition.

More preferably, a compound (A) of formula (I) is used as a reactive diluent and as an accelerator in an amine curable epoxy resin composition, preferably as a reactive diluent and as an accelerator in an epoxy resin component (i) of a two-pack amine curable epoxy resin composition.

The amine curable epoxy resin composition or, preferably, the epoxy resin component, may also comprise a conventional reactive diluent. A conventional reactive diluent is usually a compound having a molecular weight of preferably not more than 250 g/mol, e.g., of from 100 to 250 g/mol, and which contain epoxy groups, preferably glycidyl groups, in the form, for example, of glycidyl ether groups, glycidyl ester groups or glycidyl amide groups. The epoxy functionality, i.e., the number of epoxy groups per molecule, in the case of the conventional reactive diluent is typically in the range from 1 to 3, more particularly in the range from 1.2 to 2.5. Preferred is a glycidyl ether of an aliphatic or cycloaliphatic alcohol which has preferably 1, 2, 3 or 4 OH groups and 2 to 20 or 4 to 20 carbon atoms, and also a glycidyl ether of an aliphatic polyetherol which has 4 to 20 carbon atoms.

Examples of a conventional reactive diluent include
- glycidyl ethers of saturated alkanols, such as C₂-C₂₀-alkyl glycidyl ethers, for example, 2-ethylhexyl glycidyl ether;
- glycidyl ethers of saturated alkane polyolshaving 2 to 20 carbon atoms, for example, the glycidyl ethers of 1,4-butanediol, 1,6-hexanediol, trimethylolpropane or of pentaerythritol, the afore-mentioned glycidyl ether compounds generally having an epoxide functionality in the range from 1 to 3.0 and preferably in the range from 1.2 to 2.5;
- glycidyl ethers of polyetherols having 4 to 20 carbon atoms, for example, the glycidyl ethers of diethylene glycol, triethylene glycol, tetraethylene glycol, dipropylene glycol or tripropylene glycol;
- glycidyl ethers of cycloaliphatic alcohols having 5 to 20 carbon atoms, such as bisglycidyl ethers of cyclohexane-1,4-diyl, the bisglycidyl ether of ring-hydrogenated bisphenol A or of ring-hydrogenated bisphenol F;
- glycidyl ethers of polyalkylene oxides having 2 to 4 carbon atoms such as polyethylene oxide or polypropylene oxide;
and any mixtures thereof.

Where desired, the conventional reactive diluent is usually used in the epoxy resin composition in only a lower amount, since the compound (A) of formula (I) is generally sufficient to balance the reduction of the viscosity and the processability or workability of the amine curable epoxy resin composition or the epoxy resin component.

Preferably, the curable epoxy resin composition or the epoxy resin component is essentially free of a conventional reactive diluent. "Essentially free" means present in an amount of at most 5 wt%, based on the epoxy resin (B), preferably at most 2 wt%, more preferably at most 1 wt%.

Accordingly, in a preferred aspect, the invention relates to an amine curable epoxy resin composition, wherein the curable epoxy resin composition or the epoxy resin component is essentially free of a conventional reactive diluent selected from a glycidyl ether of an aliphatic polyol having 2 to 8 C atoms, a glycidyl ether of an unsaturated polyol having 2 to 8 carbon atoms, a glycidyl ether of a cycloaliphatic polyol having 3 to 8 carbon atoms, and a glycidyl ether of an aromatic polyol having 6 to 8 carbon atoms.

Especially, the conventional reactive diluent will account for not more than 10 wt%, based on the total amount of conventional reactive diluent + compound (A) of formula (I).

Advantageously, a conventional reactive diluent may be omitted.

The amine curable epoxy resin composition may comprise additives and/or fillers that are customary for such compositions. In case of a two-pack formulation, the additives and fillers may be present in the epoxy resin component and/or hardener component. The choice of suitable conventional additives and fillers for the instant composition is dependent on the particular end use of the cured epoxy resin composition and may be determined in each individual case by the skilled artisan.

Suitable conventional additives include, for example, antioxidants, UV absorbers / light stabilizers, metal deactivators, antistats, antifogging agents, blowing / propelling agents, biocides, plasticizers, lubricants, emulsifiers, colorants like pigments or pigment pastes, rheological agents, impact tougheners, catalysts, adhesion regulators, optical brighteners, flame retardants, antidropping agents, nucleating agents, organic solvents and also any mixtures thereof.

Organic solvents may be present in the epoxy resin composition, for example, as conventional organic diluent, which at atmospheric pressure have a boiling point of below 200°C and which do not enter into any bond-forming reaction with the epoxy groups and with the groups of any reactive diluent optionally present. Suitable examples are ketones having preferably 3 to 8 C atoms, such as acetone, methyl ethyl ketone, cyclohexanone, and the like; esters of aliphatic carboxylic acids, preferably of acetic acid, of propionic acid or of butanoic acid, more particularly the C₁-C₆-alkyl esters of these acids, such as ethyl acetate, propyl acetate, and butyl acetate; aromatic hydrocarbons, especially alkyl aromatics such as toluene, mesitylene, 1,2,4-trimethylbenzene, n-propylbenzene, isopropylbenzene, cumine, or xylenes, and mixtures of alkyl aromatics, more particularly technical mixtures of the kind available commercially, for example, as Solvesso grades; aliphatic and cycloaliphatic hydrocarbons; and alkanols having preferably 1 to 8 C atoms and cycloalkanols having preferably 5 to 8 C atoms, such as methanol, ethanol, n- and isopropanol, butanols, hexanols, cyclopentanol and cyclohexanol, and the like.

The amine curable epoxy resin compositions using a compound (A) of formula (I) may be processed without an organic solvent or with only a low amount of organic solvent. Thus, organic solvents may be present at most in a minor amount, generally ≤ 20 wt%, based on the epoxy resin (B), preferably ≤ 10 wt%, more preferably ≤ 5 wt%. Especially, no solvent is present (100% system).

Examples of suitable fillers include inorganic or organic particulate materials, inorganic or organic fibrous materials and any mixture thereof. Examples of inorganic fillers include calcium carbonate, magnesium-calcium carbonate (Marble flour), barium sulfate, silicates, for example, magnesium silicate, calcium silicate, aluminum silicate, or silicates based on clay minerals, like kaolinite or bentonite, alumina, aluminum hydroxide, silica, for example in form of pyrogenic/fumed silica (e.g., Aerosil), sand or silica flour (ground quartz) or glass in form of glass of hollow and solid glass spheres, glass flakes or glass fibers, for example, virgin short glass fibers or ground glass fibers. Examples of organic fillers include carbon fibers. The filler(s) may be added in an amount of 1 to 60 wt%, based on the total weight of the amine curable epoxy resin composition.

The fillers may be unmodified or modified, for example, hydrophobically modified fumed silica.

Especially, at least a part of the fillers is used in the epoxy resin component. The epoxy resin component may contain a filler in an amount of up to 70 wt%, based on the total weight of the epoxy resin component, preferably, 1 to 60 wt%, more preferably 5 to 40 wt%.

Usually, the presence of a filler, like a silicate or silica, improves the consistency of the epoxy resin component in a way that the viscosity is high enough to avoid segregation of the constituents. However, it may be observed that a stable consistency of an epoxy resin component is often limited since the viscosity of filled epoxy resin components slowly increases, which may in turn deteriorate the workability of the curable composition (mixing, portioning and application).

The presence of a compound (A) allows for stabilizing the viscosity of the epoxy resin component comprising an epoxy resin (B) and a filler, as well as to reduce the viscosity of the epoxy resin component. This allows for reducing the amount of a reactive diluent and/or reducing the costs of formulation.

Accordingly, the compound (A) of formula (I) is preferably used as a viscosity stabilizer of an epoxy resin component comprising an epoxy resin (B) and a filler, preferably a silicate- or silica-containing filler.

Preferably, the compound (A) of formula (I) is used as a viscosity stabilizer of an epoxy resin component comprising an epoxy resin (B) and a clay- or silica-containing filler.

The curable epoxy resin composition may be cured to form a cured epoxy resin. For this purpose, the curable epoxy resin composition is provided by combining and mixing its constituents, preferably by combining and mixing the epoxy resin component (i) with the hardener component (ii).

The curable epoxy resin composition may be cured thermally by heating the curable epoxy resin composition to a temperature above the mixing temperature. Since, however, the presence of the compound (A) typically entails a significant increase in the level of reactivity of the epoxy resin compositions formulated with it, curing may also take place at low temperatures. Curing of the instant epoxy resin composition is typically effected at temperatures in the range from 0 to 200°C, preferably in the range from 5 to 180°C, and more particularly in the range from 10 to 150°C. A suitable temperature is usually dependent on the particular curing agent (C) and epoxy resin (B) and on the desired curing rate and may be determined in each individual case by the skilled worker on the basis, for example, of simple preliminary tests. In the lower temperature range (5 to around 35°C), which indeed corresponds to the ambient temperature that is usually prevalent, it is of course sufficient to mix, for example, the epoxy resin component and the hardener component.

Alternatively, curing takes place preferably with microwave induction.

Accordingly, in a further aspect, the invention relates to a process for producing a cured epoxy resin, the process comprising providing, and then curing an amine curable epoxy resin composition, as defined in any aspect herein.

In a further aspect, the invention relates to a cured epoxy resin obtainable by a process, as defined in any aspect herein.

It is assumed that the reaction sequence usually starts with the ring opening reaction of the oxathiolanone ring of compound (A) of formula (I) by attack of an amino group of the curing agent (C) resulting in the formation of a carbamate group and a thiol or thiolate function which in turn reacts with an epoxy group of epoxy resin (B). Therefore, the oxathiolanone group may be considered as a chain extender transforming an amino group in a thiol group. Moreover, the amino groups of curing agent (C) react in usual manner with epoxy groups of epoxy resin (B).

The curable epoxy resin compositions may be used in various ways. They are suitable, in principle, for all applications where 1-pack or 2-pack epoxy resin formulations are typically employed. They are suitable, for example, as a binder constituent in coating materials, as adhesives, as sealants or for producing composite materials.

The epoxy resin composition is preferably applied as a two-pack formulation.

The curable epoxy resin composition, preferably the two-pack formulation, may be applied to any substrate in a usual manner, as known in the art for the various applications, for example, by joining / bonding, sealing or coating. The substrate may be any surface, for example, a gap or a hole. The substrate may be of any kind of material, usually dependent on the application of the curable epoxy resin composition.

The curable epoxy resin composition for a coating may be applied by usual means, such as knife coating, roller coating or spraying to any substrate. Any substrate may be coated, for example, wood, fabric, metal surfaces, mineral surfaces, like concrete, or polymeric surfaces. Generally, the curable composition may be applied to a substrate and cured to form a coating having a thickness of from 0.01 to 10 mm.

A variety of substrates may be sealed or bonded using the instant curable composition. The substrates to be bonded or sealed may be the same or different from one another. Examples of substrates include metal, wood, glass, plastic shaped bodies or plastic films.

The adhesive compositions, preferably the two-component adhesive composition, may be suitably used as a laminating or as a structural adhesive. Preferred bonding processes are composite film lamination, glossy film lamination, and the lamination of shaped bodies, as used particularly in furniture lamination or in the lamination of automotive interior parts, and the use as structural adhesive. Details for bonding processes are usually known to one skilled in the art.

The curable epoxy resin compositions are especially suitable for producing composite materials. Composite materials (or composites) join different materials, e.g., plastics and reinforcing materials, like glass or carbon fibers.

Accordingly, in a further aspect, the invention relates to the use of a curable epoxy resin composition, as defined in any aspect herein, for preparing an adhesive, a sealant, a coating or a composite material.

Upon polymerizing the curable epoxy resin composition an article, selected from an adhesive, a sealant, a coating and a composite material, may be obtained.

In a further aspect, the invention relates to an article, selected from an adhesive, a sealant, a coating or a composite material, obtainable by applying the curable epoxy resin composition, as defined in any aspect herein, to a substrate and curing the curable composition.

The instant oxathiolanone-group containing additive may suitably be used as a reactive diluent and/or a co-hardener / accelerator, especially as a reactive diluent and an accelerator in conventional curable epoxy-amine systems, as used in various applications, especially in coatings, adhesives, sealants or composites.

The instant oxathiolanone-group containing additive allows for an accelerating effect on conventional curable epoxy-amine systems, especially at low temperatures (cold curing).

Further, certain mechanical properties of cured systems may be improved without significantly affecting other mechano-thermal properties.

The oxathiolanone group-containing additive may provide an optimum of accelerating the curing kinetics while maintaining or without significantly reducing the glass transition temperatures, i.e., thermal stability, and processability. Preferably, a curable composition may be formulated, wherein an additional reactive diluent may be essentially omitted or omitted at all.

Compared to an oxathiolane-thione-group containing compound, the thermal stability of the corresponding oxathiolanone-group containing compound (compound (A)) may be increased which offers higher operating temperatures and less potential for degradation while processing a compound (A) in the formulation.

The addition of the oxathiolanone group-containing additive to the epoxy resin (B) to be cured may provide stable mixtures at low temperatures without crystallization, which is usually suitable in outdoor applications like floorings or in geographical regions where lower temperature processing is important.

The addition of the oxathiolanone group-containing additive to curable epoxy resin compositions allows comparatively long available operating time with comparatively low viscosity. Thus, it provides a balance between sufficient viscosity dilution as well as sufficient reactivity dilution. In other words, the additive may be used as a compatibilizer for achieving a diluting effect and a homogenous mass to be handled, especially in filled systems. This may be of advantage, when a coating should be applied in more than one layers.

Cured products based on the instant oxathiolanone-group containing compound are usually colorless and transparent, compared to more yellow cured products based on the oxathiolane-thione-group containing compound. This may be of advantage for applications where optical transparency or certain specific color shades are desired.

Moreover, cured products based on the instant oxathiolanone-group containing compound are usually more water resistant, compared to cured products based on the oxathiolane-thione-group containing compound, which may avoid swelling, plasticizing and lowering of stiffness as well as cracking or failure in various applications. The same applies to the resistance towards organic solvents, which may be of advantage to maintain properties like adhesion, texture, gloss, optical clarity, mechanical integrity and stability for various applications. Thus, cured products may show comparable favorable mechanical, chemical resistance and thermal properties such as low water uptake and high glass transition temperatures.

Cured products based on the instant oxathiolanone-group containing compound show good ductility, while maintaining or even increasing stiffness, wherein the addition of a conventional additive, like an epoxy-based reactive diluent, usually increases only one of said properties, for example, the ductility.

Finally, the cured products have the advantage that urethane groups introduced in the network show less potential risk to release of toxic fragmentation products like carbonyl sulfide (COS), contrary to thiourethane groups, which are introduced using an oxathiolane-thione-group containing additive.

The definitions and preferences given for the process mentioned herein-before apply in any combination as well as in any combination for the other aspects of the invention. The present invention will now be explained in more detail with reference to the following examples. These examples should not be construed as limited. Unless otherwise stated, "%" is always % by weight (wt%).

### Examples

### Used chemicals

1,4-butanediolbisglycidylether: Sigma-Aldrich
1,3-bisaminomethyl-cyclohexane: Mitsubishi Chemicals
Polyetheramine D 230: primary polyetheramine based on polypropylene glycol and having an average molar mass of 230 (BASF)
Epilox A19-03: diglycidylether of Bisphenol-A, epoxy eq. 182-192, Leuna Harze
Epilox P13-21 : diglycidylether of 1,4-butanediol, epoxy eq. 125-145; Leuna Harze
Bentone SD^{®}-2: organic derivative of a bentonite clay
Aerosil^{®} 300: hydrophilic fumed silica
Aerosil R 805: hydrophobic fumed silica

### Thermogravimetric analysis (TGA)

The thermal stability was analysed using the thermogravimetric analyzer TG 209 F1 Libra^{®} (Netzsch) with a sample of ca 5 to 8 mg in an Al crucible in nitrogen atmosphere.
Temperature range: 40-500°C
Heating rate: 20.0 K/min

### Differential Scanning Calorimetry (DSC)

The test was carried out with a Differential Scanning Calorimeter DSC 204 F1 Phoenix (Netzsch). 5-10 mg of a sample were weighed in an aluminum Concavus^{®} pan and sealed with an aluminum Concavus lid. The lid was pierced and placed inside the oven using an automatic sample changer. A heat-cool-heat cycle was employed with the first cycle from 0°C to 230°C at 5 K/min and cooling down to 0°C at 5 K/min and heated up to 250°C at 20 K/min. For the cured samples (cookies), the heat-cool-heat cycle was employed to ascertain the glass transition temperature.

### Rheology

For the measurement of the viscosity and the gel point and loss modulus of the reactive samples, the Physic MCR 391 rheometer from Anton Paar was used. A defined amount of a formulation was weighed into a 250 ml speed mixer beaker, mixed either with a spatula or in a speed mixer depending on the reactivity of the formulation and then measured with a PP15, a parallel plate rheometer with diameter of 15 mm, at 23°C and 75°C. Until the viscosity reached 10.000 mPa.s a rotating measuring program, with a shear rate of 100 s⁻¹, was used. Afterwards one changed to an oscillating program where one measured with a frequency of 10 s⁻¹ and a shear deformation of 0.1-0.01%. The gel point is defined as the cross over point of the loss and storage modulus curve.

For the viscosity measurements of a filler-containing mixture, a parallel plate was used with a diameter of 25 mm and a shear rate of 10 s⁻¹ with a 1 mm gap between the plates. The filler was added to the epoxy resin and the additive (e.g., compound of formula (III)), if present, in a speed mixer beaker in multiple steps to ensure thorough mixing.

With respect to a Bentone SD-2-containing mixture, the epoxy resin was first mixed with the filler at 800 rpm for about 2 min, and then the compound of formula (III) was added and mixed again at 2350 rpm for 10 min. The viscosity of the mixture was then measured at 23°C.

With respect to an Aerosil-containing mixture, the epoxy resin and the filler were added in multiple steps and mixed for a total of about 20 min between 1000 to 2350 rpm depending on the quantities mixed. Since the Aerosil-containing mixtures were too viscous at room temperature, and the viscosity of the Aerosil-containing mixtures were measured at 60°C.

### Water uptake [%]

Polymer samples (cookies) with a diameter of about 3 cm, a thickness of about 2 mm and a weight of about 400 mg were made. Each sample was immersed in water at 70°C for 7 days, and the weight gain of each sample was measured.

### Solvent uptake f%1

Polymer samples (cookies) with a diameter of about 3 cm, a thickness of about 2 mm and a weight of about 400 mg were made. Each sample was immersed in a solvent at room temperature (20-25°C) for 7 days, and the weight gain of each sample was measured.

### Brittleness

The impact strength and ductility of the formulations were measured using a Charpy impact test according to DIN EN ISO179-2:2012. The dimensions of the sample were 4 x 10 x 80 mm. The flexural modulus and the yield stress were measured in accordance with DIN ISO EN 178:219. Testing was performed on a Zwick Z050 universal testing machine.

### Synthesis Example 1

The compound of formula (III) (1,4-bis[(1,3-oxathiolan-2-on-4-yl)-methoxy]-butane) was prepared according to the Synthesis Example in WO 2020/109053 A1.

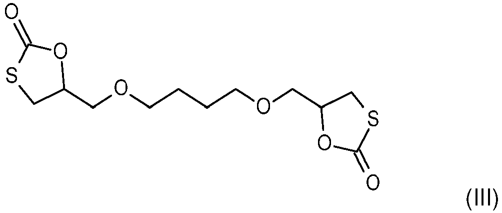

Thermal stability: the compound of formula (III) is stable up to a temperature of 275°C.

### Synthesis Example 2

The compound of formula (IV) (1,4-bis[(1,3-oxathiolan-2-thion-4-yl)-methoxy]-butane) was prepared according to N. Kihara et al., J. Org. Chem., 1995, 60, 473-475. The product was obtained as yellowish waxy solid. 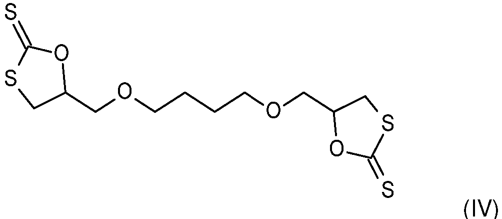 ¹H NMR (400 MHz, CDCl₃, δ): 5.25 (m, 2H, O-CHR), 3.4-3.9 (m, 12H), 1.6-1.75 (m, 4H, C-CH₂-CH₂-C)

Thermal stability: the compound of formula (IV) is stable up to a temperature of 250°C.

### General procedure for preparing the curable compositions and cured products

Epilox A19-03 was mixed with ca. 20 wt% of a compound, as obtained in the Synthesis Example 1 or Synthesis Example 2, based on the total weight of the epoxy resins and the compound, as obtained in the Synthesis Examples 1 or 2, in a speed mixer at 2000 rpm to obtain a homogenous mixture. Then, an amino compound (compound B) was added, using the indicated equivalent ratio of epoxy groups to NH groups, while mixing for 1 min. The resulting mixture were analysed as freshly prepared mixture, cured as a cookie or as plate.

A cookie was cured in a mold (aluminum, diameter approx. 5 cm) with a layer thickness of about 2 mm for the indicated time and temperature.

A plate was cured in a mold (aluminum) with a layer thickness of about 4 mm or of dimensions required for the test methods for the indicated time and temperature.

### Example 1

| | |
|---|---|
| 83 g | Epilox A19-03 |
| 17 g | compound of formula (III), obtained in Synthesis Example 1 |
| 19.33 g | 1,3-bisaminomethyl-cyclohexane |

Epilox A19-03 was mixed with the compound of formula (III) in a speed mixer at 2000 rpm to obtain a homogenous mixture. Then, 1,3-bisaminomethyl-cyclohexane was added, using a stoichiometric ratio of epoxy groups to amino groups, while mixing for 1 min. The resulting mixture heated up, and the viscosity increased, but the mixture was still fluid and homogeneous. A colorless and transparent plate with a slightly yellowish tinge could be obtained.

### Comparative Example 1

| | |
|---|---|
| 83 g | Epilox A19-03 |
| 19.33 g | 1,3-bisaminomethyl-cyclohexane |

Epilox A19-03 was mixed with 1,3-bisaminomethyl-cyclohexane using a stoichiometric ratio of epoxy groups to amino groups in a speed mixer at 2000 rpm for 1 min.

### Comparative Example 2

| | |
|---|---|
| 83 g | Epilox A19-03 |
| 17 g | compound of formula (IV), obtained in Synthesis Example 2 |
| 18.36 g | 1,3-bisaminomethyl-cyclohexane |

Epilox A19-03 was mixed with the compound of formula (IV) in a speed mixer at 2000 rpm to obtain a homogenous mixture. Then, 1,3-bisaminomethyl-cyclohexane was added, using an equivalent ratio of epoxy groups to NH groups of 1 : 0.95, while mixing for 1 min. The resulting mixture heated up rapidly, the viscosity increased, and the mixture became inhomogeneous. Only a freshly prepared sample and a cookie could be analysed with DSC, but it was not possible to make a plate.

### Comparative Example 3

| | |
|---|---|
| 73 g | Epilox A19-03 |
| 10 g | Epilox P13-21 |
| 17 g | compound of formula (IV), obtained in Synthesis Example 2 |
| 20.23 g | 1,3-bisaminomethyl-cyclohexane |

Epilox A19-03 was mixed with the compound of formula (IV) and Epilox P13-21 in a speed mixer to obtain a homogenous mixture. Then, 1,3-bisaminomethyl-cyclohexane was added, using a stoichiometric ratio of epoxy groups to amino groups, while mixing for 1 min. The resulting mixture heated up, and the viscosity increased, but the mixture remained homogeneous and processable.

### Comparative Example 4

| | |
|---|---|
| 63 g | Epilox A19-03 |
| 20 g | Epilox P13-21 |
| 17 g | compound of formula (IV), obtained in Synthesis Example 2 |
| 21.19 g | 1,3-bisaminomethyl-cyclohexane |

The procedure of Comparative Example 3 was repeated. The resulting mixture heated up, and the viscosity increased, but the mixture remained homogeneous and processable.

### Example 2

| | |
|---|---|
| 83 g | Epilox A19-03 |
| 17 g | compound of formula (III), obtained in Synthesis Example 1 |
| 34.32 g | Polyetherdiamine D230 |

Epilox A19-03 was mixed with 20 wt% of the compound of formula (III), based on the total weight of Epilox A19-03, in a speed mixer at 2000 rpm to obtain a homogeneous mixture. Then, Polyetherdiamine D230 was added, using a stoichiometric ratio of epoxy groups to amino groups, while mixing for 1 min. The resulting mixture heated up, and the viscosity increased, but the mixture was still fluid and homogeneous.

### Comparative Example 5

| | |
|---|---|
| 83 g | Epilox A19-03 |
| 34.32 g | Polyetherdiamine D230 |

Epilox A19-03 was mixed with Polyetherdiamine D230 using a stoichiometric ratio of epoxy groups to amino groups in a speed mixer at 2000 rpm for 1 min.

### Comparative Example 6

| | |
|---|---|
| 83 g | Epilox A19-03 |
| 17 g | compound of formula (IV), obtained in Synthesis Example 2 |
| 32.61 g | Polyetherdiamine D230 |

Epilox A19-03 was mixed with the compound of formula (IV) in a speed mixer at 2000 rpm to obtain a homogeneous mixture. Then, Polyetherdiamine D230 was added, using an equivalent ratio of epoxy groups to amino groups of 1 : 0.95, while mixing for 1 min. The resulting mixture heated up rapidly, and the viscosity increased. The mixture became inhomogeneous. Only a freshly prepared sample and a cookie could be analysed with DSC, but it was not possible to make a plate.

The freshly prepared mixtures of Examples 1 and 2 and Comparative Examples 1-4 were analysed *via* DSC as well as cookies of Examples 1 and 2 and Comparative Examples 1, 2 and 5 and 6. The color and appearance, resp., were observed. The results are listed in Table 1.

**Table 1**

| | Freshly prepared mixture | | | Cookie | | |
|---|---|---|---|---|---|---|
| | Onset [°C] | T_{g} [°C] | appearance | T_{g} [°C] | Curing condition | Appearance |
| Comp. Ex. 1 | 68 | 144 | transparent / colorless | 149 | 2 h / 80°C | transparent / colorless |
| | | | | | 2 h / 140°C | |
| | | | | | | |
| Ex. 1 | 55 | 103 | yellow | 115 | 2 h / 80°C | transparent / colorless, slightly yellowish tinge |
| | | | | | 2 h / 140°C | |
| Comp. Ex. 2 | 48 | 114 | yellow | 120 | 2 h / 80°C | Yellow |
| | | | | | 2 h / 140°C | |
| Comp. Ex. 3 | 49 | 98 | yellow | n.d. | 2 h / 80°C | Yellow |
| | | | | | 2 h / 140°C | |
| Comp. Ex. 4 | 49 | 90 | yellow | n.d. | 2 h / 80°C | Yellow |
| | | | | | 2 h / 140°C | |
| Comp. Ex. 5 | 83 | 87 | transparent / colorless | 85 | 2 h / 60°C | transparent / colorless |
| | | | | | 2 h / 100°C | |
| Ex. 2 | 63 | 71 | slightly yellow *^{b)} | 78 | 2 h / 60°C | transparent, slightly yellowish tinge **^{b)} |
| | | | | | 2 h / 100°C | |
| Comp. Ex. 6 | 81 | 59 | Yellow *^{a)} | 65 | 2 h / 60°C | Yellow **^{a)} |
| | | | | | 2 h / 100°C | |

| | | | | | | |
|---|---|---|---|---|---|---|
| n.d. not determined *^{b)} Fig. 1b *^{a)} Fig. 1a **^{b)} Fig. 2b **^{a)} Fig. 2a | | | | | | |

The DSC curve of Example 2 shows one exothermic peak, whereas the corresponding peak of the DSC curve of Comparative Example 6 is broader and show a shoulder indicating that a more inhomogeneous network was formed and/or side reactions occurred.

The cured plate made in Example 1 is colorless and transparent with a slightly yellowish tinge.

### Comparative Example 7

| | |
|---|---|
| 83 g | Epilox A19-03 |
| 17 g | compound of formula (IV), obtained in Synthesis Example 2 |
| 19.33 g | 1,3-bisaminomethyl-cyclohexane |

For the preparation of the mixture of Comparative Example 7, the starting materials were cooled overnight to 4.4°C prior to sample preparation.

The mixtures of Example 1 and Comparative Examples 1 and 7 were analysed with respect to their rheology properties and curing kinetics.

The results of Example 1 and Comparative Examples 1 and 7 were listed in Table 2.

**Table 2**

| | 23°C | |
|---|---|---|
| | Gel point detected after [min] | maximum loss modulus detected after [min] |
| Comp. Ex. 1 | 279 | 181 |
| Ex. 1 | 173 | 177 |
| Comp. Ex. 7 | n.d. | n.d. |

| | | |
|---|---|---|
| n.d. = not determined | | |

The time taken to reach the gel point could be reduced using 1,4-bis[(1,3-oxathiolan-2-on-4-yl)-methoxy]-butane in view of the composition of Comparative Example 1 allowing for faster curing of a system containing a compound of formula (III). However, the mixture containing 1,4-bis[(1,3-oxathiolan-2-thion-4-yl)-methoxy]-butane (Comp. Ex. 7) was very reactive and therefore already viscous, thus, said mixture could not be analysed and is disadvantageous with respect to workability.

### Example 3

| | |
|---|---|
| 83 g | Epilox A19-03 |
| 12.75 g | compound of formula (III), obtained in Synthesis Example 1 |
| 19.33 g | 1,3-bisaminomethyl-cyclohexane |

The procedure of Example 1 was repeated with the above indicated amounts. A polymer sample was obtained after curing for 2 hours at 80°C and 2 hours at 140°C.

### Comparative Example 8

The procedure of Comparative Example 1 was repeated. A polymer sample was obtained after curing for 2 hours at 80°C and 2 hours at 140°C.

### Comparative Example 9

| | |
|---|---|
| 83 g | Epilox A19-03 |
| 12.75 g | compound of formula (IV), obtained in Synthesis Example 2 |
| 19.33 g | 1,3-bisaminomethyl-cyclohexane |

The procedure of Comparative Example 7 was repeated with the indicated amounts, wherein the starting materials were cooled overnight to 0°C prior to sample preparation. A polymer sample was obtained after curing for 2 hours at 80°C and 2 hours at 140°C.

### Example 4

| | |
|---|---|
| 83 g | Epilox A19-03 |
| 12.75 g | compound of formula (III), obtained in Synthesis Example 1 |
| 34.32 g | Polyetherdiamine D230 |

The procedure of Example 2 was repeated with the indicated amounts. A polymer sample was obtained after curing for 2 hours at 60°C and 2 hours at 100°C.

### Comparative Example 9

| | |
|---|---|
| 83 g | Epilox A19-03 |
| 12.75 g | compound of formula (IV), obtained in Synthesis Example 2 |
| 34.32 g | Polyetherdiamine D230 |

The procedure of Comparative Example 6 was repeated except that 15 wt% of the compound of formula (IV), obtained in Synthesis Example 2, was used. A polymer sample was obtained after curing for 2 hours at 60°C and 2 hours at 100°C.

The results of water uptake and solvent up take are shown in Tables 3 and 4.

**Table 3**

| | Water uptake [%] |
|---|---|
| Comp. Ex. 8 | 1.21 |
| Ex. 3 | 1.44 |
| Comp. Ex. 9 | 2.11 |
| Ex. 4 | 1.48 |
| Comp. Ex. 10 | 2.73 |

The incorporation of urethane groups in the polymer yields better results for water stability than the incorporation of thiourethane groups compared to usually more water-stable epoxy-amine polymers.

**Table 4**

| | Solvent uptake in toluene [%] | Solvent uptake in 20% methanolic KOH [%] |
|---|---|---|
| Ex. 3 | 0.01 | 0.27 |
| Comp. Ex. 9 | 0.26 | 0.39 |

The incorporation of urethane groups in the polymer yields better results for solvent stability than the incorporation of thiourethane groups.

### Comparative Example 11

| | |
|---|---|
| 83 g | Epilox A19-03 |
| 17 g | Epilox P13-21 |
| 19.33 g | 1,3-bisaminomethyl-cyclohexane |

The procedure of Example 1 was repeated with the above indicated amounts to obtain a plate (curing condition: 2 hours at 80°C and 2 hours at 140°C).

Table 5 shows data regarding the brittleness of Example 1, Comparative Examples 1 and 11.

**Table 5**

| | Flexural modulus [MPa] | Yield stress [MPa] | Charpy impact strength a_{cN} [kJ/m²] |
|---|---|---|---|
| Ex. 1 | 3263 | 132.9 | 5.16 |
| Comp. Ex. 1 | 2980 | 126.7 | 2.35 |
| Comp. Ex. 11 | 2721 | 110.8 | 3.63 |

As a plate of Comparative Example 2 could not be made, no comparative data could be generated. The data for the Charpy impact strength (measure of brittleness) show that the sample of Comparative Example 1 (epoxy resin without a reactive diluent) is more brittle than the samples of Example 1 and Comparative Example 11 (with a reactive diluent) due to higher cross-linking density. The higher the value of the Charpy impact strength, the more ductile the sample. The higher the value for the flexural modulus or yield stress, the stiffer the sample. Thus, using the compound of formula (III), obtained in Synthesis Example 1, in amine-curable epoxy resin increases both the ductility and stiffness.

### General procedure of preparing filler-containing mixtures

A mixture of the respective components was prepared by stirring in a speed mixer at room temperature until a homogeneous mixture is formed.

### Comparative Example 12

| | |
|---|---|
| 27 g | Epilox A19-03 |
| 3 g | Bentone SD-2 |

### Example 5

| | |
|---|---|
| 24 g | Epilox 19-03 |
| 3 g | Bentone SD-2 |
| 3 g | compound of formula (III), obtained in Synthesis Example 1 |

### Example 6

| | |
|---|---|
| 24.5 g | Epilox 19-03 |
| 3.5 g | Aerosil 300 |
| 7 g | compound of formula (III), obtained in Synthesis Example 1 |

### Comparative Example 13

| | |
|---|---|
| 24.5 g | Epilox 19-03 |
| 3.5 g | Aerosil 300 |
| 7 g | Epilox P13-21 |

### Example 7

| | |
|---|---|
| 24.5 g | Epilox 19-03 |
| 3.5 g | Aerosil R 805 |

| | |
|---|---|
| 7 g | compound of formula (III), obtained in Synthesis Example 1 |

### Example 8

| | |
|---|---|
| 21 g | Epilox 19-03 |
| 3.5 g | Aerosil 300 |
| 10.5 g | compound of formula (III), obtained in Synthesis Example 1 |

### Comparative Example 14

| | |
|---|---|
| 31.5 g | Epilox 19-03 |
| 3.5 g | Aerosil 300 |

### Comparative Example 15

### Epilox 19-03

Figures 3 to 5 demonstrate the advantageous use of the compound of formula (III) as a reactive diluent as well as an additive for stabilizing the viscosity of a filler-containing system. For example, the viscosity of Example 6 is significantly lower than the viscosity of Comparative Example 13, demonstrating that the additive (compound of formula (III)) allows for a formulation without additional reactive diluent and better processing for composites, compared to the use of a conventional epoxy-based additive (see Fig. 4). This may enable the manufacture of highly filled solids with good workability.

## Claims

1. The use of a compound (A) of formula 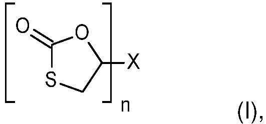 wherein
X is a n-valent organic group or H, and
n is an integer of 1, 2, 3 or 4,
as an additive in an amine curable epoxy resin composition.

2. The use according to claim 1, wherein compound (A) has a molecular weight of at most 500 g/mol.

3. The use according to claim 1 or 2, wherein
X is a monovalent organic group X¹ or H, said monovalent organic group X¹ is selected from C₁-C₁₈-alkyl; C₁-C₁₈-alkyl substituted with OH, halogen, NR¹R², C₅-C₁₀-cycloalkyl, C₆-C₁₂-aryl, C₆-C₁₂-aryloxy, C₆-C₁₂-arylthio or C₂-C₁₀-heteroaryl, and / or interrupted with O, S, -COO-, -OCOO-, -CO-, C₅-C₈-cycloalkylene, C₆-C₁₂-arylene or C₂-C₁₀-heteroarylene;
R¹ and R² are independently of one another and at each occurrence C₁-C₄-alkyl or phenyl;
or R¹ and R² together are C₄-C₆-alkylene or C₄-C₆-alkylene interrupted by O, S and/or NR³; and R³ is C₁-C₄-alkyl;
or
X is a divalent organic group X², said divalent organic group X² is selected from C₁-C₁₈-alkylene and C₁-C₁₈-alkylene substituted with halogen, NR⁴R⁵, C₅-C₁₀-cycloalkyl, C₆-C₁₂-aryl, or C₂-C₁₀-heteroaryl, and/or interrupted with O, S, -COO-, -OCOO-, -CO-, C₅-C₈-cycloalkylene, C₆-C₁₂-arylene, C₆-C₁₂-aryleneoxy, C₆-C₁₂-arylenethio, 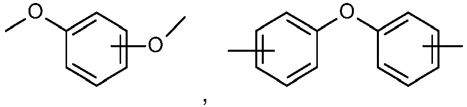 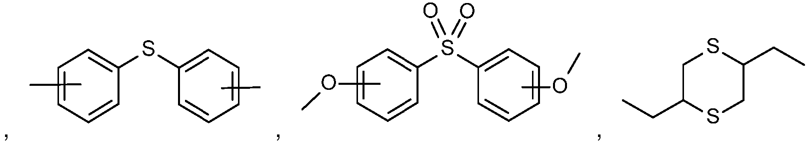 or C₂-C₁₀-heteroarylene;
R⁴ and R⁵ are independently of one another and at each occurrence C₁-C₄-alkyl or phenyl;
or
X is a trivalent organic group X³, said trivalent group X³ is composed of either benzenetriyl, triazine-2,4,6-triyl, 2,4,6-trioxo-1,3,5-triazine-triyl, methylidyne or nitrogen and a divalent organic group X^{2a},
or
X is a tetravalent organic group X⁴, said tetravalent group X⁴ is composed of either a group derived from methane or benzene and a divalent organic group X^{2a},
wherein X^{2a} is selected from C₁-C₁₈-alkylene; C₁-C₁₂-alkyleneoxy; C₆-C₁₂-arylene; C₆-C₁₂-aryleneoxy; and C₁-C₁₈-alkylene interrupted with O, S, -COO-, C₅-C₈-cycloalkylene, C₆-C₁₂-arylene, C₆-C₁₂-aryleneoxy, C₆-C₁₂-arylenethio, 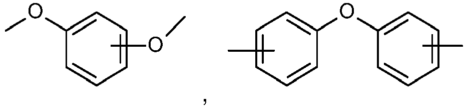 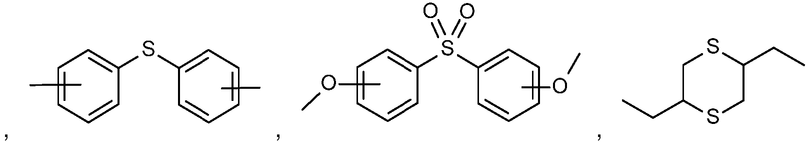 or C₂-C₅-heteroarylene.

4. The use according to claim 1, 2 or 3, wherein n is an integer of 1, 2 or 3, preferably 1 or 2.

5. The use according to any one of the preceding claims, wherein
X is a monovalent organic group X¹ or H, said monovalent organic group X¹ is C₁-C₁₂-alkyl; C₁-C₁₂-alkyl substituted with halogen, cyclohexyl, phenyl, phenoxy, phenylthiol and / or interrupted with O, S, -COO-; cyclohexylene or phenylene;
or
X is a divalent organic group X², said divalent organic group X² is selected from C₁-C₁₈-alkylene and C₁-C₁₈-alkylene interrupted with O, S, -COO-, cyclohexylene, phenylene, phenyleneoxy, phenylenethio 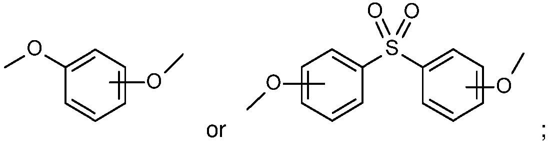 or X is a trivalent organic group X³, said trivalent organic group X³ is group composed of either benzenetriyl, triazine-2,4,6-triyl, 2,4,6-trioxo-1,3,5-triazine-triyl, methylidyne or nitrogen and a divalent organic group X^{2a}, wherein X^{2a} is selected from C₁-C₁₂-alkylene; phenylene, C₁-C₁₂-alkyleneoxy; 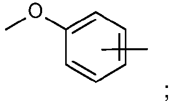 and C₁-C₆-alkylene interrupted with O, S, -COO-, cyclohexylene, phenylene and phenyleneoxy.

6. The use according to any one of the preceding claims, wherein the compound of formula (I) is a compound of formula 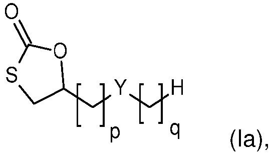 wherein
Y is a direct bond, O or COO, and
p is an integer of 1 to 9, and q is an integer of 0 to 9;
or
a compound of formula 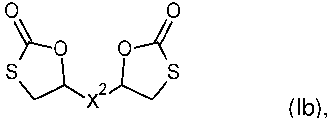 wherein
X² is C₁-C₁₈-alkylene; C₁-C₁₈-alkylene interrupted with O, S, COO, C₅-C₈-cycloalkylene, phenylene, phenyleneoxy, phenylenethio, 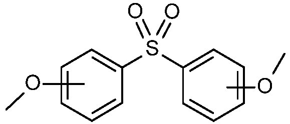 and / or 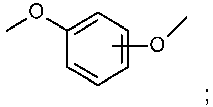
or a mixture thereof.

7. The use according to any one of the preceding claims, wherein the compound of formula (I) is a compound of formula (Ib), wherein the divalent group X² is selected from 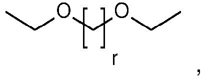 wherein r is 2, 3 or 4; 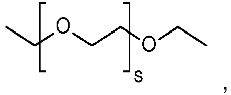 wherein s is about 1 to 10, preferably s is about 1 to 5; 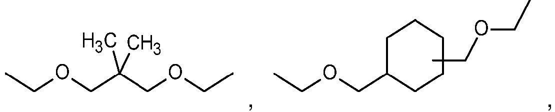 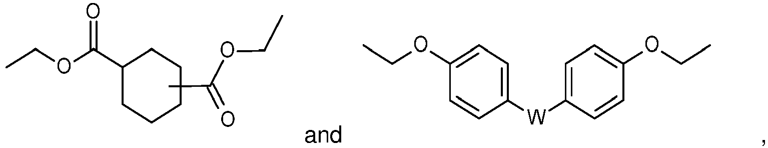 wherein W is CH₂, C(CH₃)₂, CH(CH₃), C(CH₃)(C₂H₅) or SO₂.

8. The use according to any one of the preceding claims, wherein the amine curable epoxy resin composition comprises an epoxy resin component (i) and a hardener component (ii).

9. The use according to any one of the preceding claims, wherein the additive is used as a viscosity stabilizer of the epoxy resin component (i) comprising an epoxy resin (B) and a filler.

10. A curable epoxy resin composition comprising
a) a compound (A) of formula (I), as defined in any of claims 1 to 7;
b) an epoxy resin (B); and
c) a curing agent (C) comprising at least two amino groups, selected from a primary amino group, a secondary amino group and any combination thereof;
wherein the equivalent ratio of groups of formula 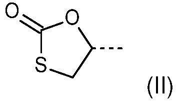 of compound (A) to epoxy groups of epoxy resin (B) is 0.45 : 1 to 0.05 : 1.

11. The curable composition according to claim 10, wherein the equivalent ratio of groups of formula (II) of compound (A) to epoxy groups of epoxy resin (B) is 0.4 : 1 to 0.1 : 1.

12. The curable composition according to claim 10 or 11, wherein the epoxy resin (B) comprises at least one polyglycidyl ether of an aromatic, an aliphatic or a cycloaliphatic polyol, preferably at least one polyglycidyl ether of an aromatic polyol.

13. The curable composition according to claim 10, 11 or 12, wherein the curable epoxy resin composition is a two-pack formulation comprising
(i) an epoxy resin component containing
a) the compound (A),
b) the epoxy resin (B), and
d) optionally a filler, and
(ii) a hardener component containing
c) the curing agent (C).

14. The curable composition according to any one of the claims 10 to 13, wherein the curable epoxy resin composition or the epoxy resin component is essentially free of a conventional reactive diluent selected from a glycidyl ether of an aliphatic polyol having 2 to 8 carbon atoms, a glycidyl ether of an unsaturated polyol having 2 to 8 carbon atoms, a glycidyl ether of a cycloaliphatic polyol having 3 to 8 carbon atoms, and a glycidyl ether of an aromatic polyol having 6 to 8 carbon atoms.

15. The use of a curable epoxy resin composition, as defined in any of claims 10 to 14, for preparing an adhesive, a sealant, a coating or a composite material.
